**Europäisches Patentamt**

**European Patent Office**

**Office européen des brevets**

(19)

(11) Numéro de publication: **0 219 435 B1**

# (12) FASCICULE DE BREVET EUROPEEN

(45) Date de publication du fascicule du brevet:
**22.11.90**

(51) Int. Cl.⁵: **G06F 15/62**

(21) Numéro de dépôt: **86402283.5**

(22) Date de dépôt: **14.10.86**

(54) **Procédé de détection de contours en imagerie, et d'estimation locale de leurs paramétres, dans un espace à au moins trois dimensions, et dispositif pour la mise en oeuvre de ce procédé.**

(30) Priorité: **16.10.85 FR 8515303**

(43) Date de publication de la demande:
**22.04.87 Bulletin 87/17**

(45) Mention de la délivrance du brevet:
**22.11.90 Bulletin 90/47**

(84) Etats contractants désignés:
**DE GB IT SE**

(56) Documents cités:
**NATO ASI Series, vol F2, 1983, pages 292-306, Image sequence processing and dynamic scene analysis, edité par T.S. Huang, Springer-Verlag, Berlin, DE; C. LABIT et al.: "Motion estimation in a sequence of television pictures"**

(73) Titulaire: **THOMSON-CSF, 51, Esplanade du Général de Gaulle, F-92800 Puteaux(FR)**

(72) Inventeur: **Bouthemy, Patrick, THOMSON-CSF SCPI 19, avenue de Messine, F-75008 Paris(FR)**
Inventeur: **Richard, Christian Jacques, THOMSON-CSF SCPI 19, avenue de Messine, F-75008 Paris(FR)**

(74) Mandataire: **Turlèque, Clotilde et al, THOMSON-CSF SCPI, F-92045 PARIS LA DEFENSE CEDEX 67(FR)**

EP 0 219 435 B1

## Description

L'invention concerne un procédé de détection de contours multidimensionnels en imagerie et d'estimation locale de leurs paramètres caractéristiques, dans un espace à au moins trois dimensions, cet espace étant représenté par au moins une suite d'images à deux dimensions, et chaque point d'image étant représenté par la valeur numérique de sa luminance. Ces contours multidimensionnels, qui sont appelés hypercontours dans ce qui suit, sont des portions d'hypersurfaces dans un espace donné, une hypersurface étant une surface à n-1 dimensions dans un espace à n dimensions, avec n supérieur ou égal à 3. La suite d'images ou les suites d'images considérées et les contours considérés peuvent être de plusieurs types différents :

- la suite d'images peut être une séquence d'images de télévision classique ; l'espace considéré a alors deux dimensions spatiales et une dimension temporelle, et l'hypercontour représente un contour dans l'image et le déplacement de ce contour ;
- la suite d'images peut être une série de coupes d'un objet dans un espace tri-dimensionnel ; l'espace considéré a alors trois dimensions spatiales, et l'hypercontour représente un contour tridimensionnel ;
- plusieurs suites d'images peuvent être constituées de plusieurs suites de coupes d'un objet, chaque suite correspondant à un instant distinct, l'espace considéré a alors trois dimensions spatiales et une dimension temporelle, et l'hypercontour représente un contour tridimensionnel et le déplacement de ce contour ;
- la suite d'images peut être constituée d'un couple d'images de télévision stéréoscopique ; l'espace considéré a alors trois dimensions spatiales.

Classiquement, un point d'une image est considéré comme appartenant à un contour représenté dans cette image lorsqu'il appartient à une frontière entre deux zones ayant des luminances différentes. Il est connu de considérer une séquence d'images ordonnée dans le temps comme un espace à trois dimensions (x, y, t) où x et y sont les coordonnées spatiales d'un point d'image dans un plan contenant cette image et où t est l'instant de prise de vue, et il est connu de généraliser la notion de contour en considérant des contours tri-dimensionnels dans cet espace. Ces hypercontours sont des surfaces engendrées par le déplacement, au cours du temps, des contours bi-dimensionnels de l'objet dans le plan d'image. Il est connu aussi de modéliser un élément de contour bi-dimensionnel par un segment de droite contenu dans le plan d'image, et de modéliser un élément de contour tri-dimensionnel par une portion de plan engendré par le déplacement de ce segment au cours d'un petit intervalle de temps. Ce procédé est évoqué dans la publication suivante :

(Cl. Labit, A. Benveniste). "Motion estimation in a sequence of television pictures" in Image Sequence Processing and Dynamic Scene Analysis. T.S. Huang ed., Springer-Verlag, Berlin, 1983, pages 292-306.

Classiquement, la détection des contours bi-dimensionnels et l'estimation de leur déplacement sont réalisées en deux étapes distinctes. La première étape est réalisée selon de nombreux procédés classiques. La seconde étape est réalisée selon deux types de procédés : les procédés différentiels et les procédés de mise en correspondance de contours, appelés respectivement "gradient-based method" et "feature-based method", en anglais. Les procédés différentiels sont évoqués par :

(E. Hildreth) : "Computations Underlying the Measurement of Visual Motion". Artificial Intelligence, 23, 1984, pages 309-354.

Ils permettent de déterminer la composante du déplacement perpendiculaire à l'élément de contour considéré. Ils ne permettent pas de déterminer localement la composante parallèle. Le module de la composante normale du déplacement est estimé en calculant le rapport de la dérivée de la luminance par rapport au temps sur le module du gradient de la luminance au voisinage de la portion de contour considérée, en faisant l'hypothèse que les variations de luminance d'une image à la suivante sont dues uniquement au mouvement. Les procédés différentiels souvent sous-estiment les déplacements et parfois donnent une estimation erronée pour les contours dans l'image qui correspondent à des ruptures de profondeur dans la scène observée.

Les méthodes associatives sont des méthodes qui considèrent globalement les contours, elles permettent donc d'obtenir les deux composantes du vecteur déplacement d'un contour bi-dimensionnel. Elles ont pour inconvénient de nécessiter un temps de calcul particulièrement long tout en ne fournissant une estimation du déplacement que pour un nombre limité de points dans chaque image. Un procédé de ce type est décrit par exemple par :

(Aggarwall J.K., Davis L., Martin W.) "Correspondence Processes in Dynamic scene Analysis." Proc. IEEE, vol. 69, n°5, mai 1981, pages 562-572.

Le but de l'invention est de remédier aux inconvénients des procédés connus. Un premier objet de l'invention est un procédé consistant à modéliser localement tout hypercontour par une portion d'une hypersurface dont les paramètres sont choisis parmi un certain nombre de jeux de valeurs prédéterminées. Cette hypersurface est définie par rapport à un repère ayant au moins trois dimensions. Le jeu de paramètres est choisi en calculant la valeur d'une fonction dite rapport de vraisemblance généralisée pour chacun des jeux possibles. Le calcul des valeurs du rapport de vraisemblance généralisée est constitué principalement par le calcul de produits de convolution.

2

Un second objet de l'invention est un dispositif pour la mise en oeuvre du procédé selon l'invention, appliqué à un espace à trois dimensions.

Ce procédé permet d'obtenir simultanément une détection locale des hypercontours et une estimation locale de leurs paramètres caractéristiques. Il permet de détecter les hypercontours dans un repère à deux dimensions spatiales et une dimension temporelle, ou trois dimensions spatiales ; ou aussi bien dans un repère à quatre dimensions : trois dimensions spatiales et une dimension temporelle. Dans le cas d'une séquence d'image, permet d'obtenir localement des estimations fiables des déplacements pour des contours correspondants à des ruptures de profondeur et il permet d'estimer n'importe quel type de déplacement des contours, y compris des rotations, avec cependant une précision moindre pour les points situés près du centre de rotation. La valeur des paramètres de l'hypercontour en un point n'est pas limitée par le procédé, seule la résolution de l'estimation est limitée par le nombre de jeux de valeurs prédéterminées pour les paramètres. Il a aussi pour avantage d'être très général puisqu'il permet de détecter et d'estimer localement des hypercontours dans un repère à trois ou quatre dimensions pour des images appartenant à l'un quelconque des quatre types d'images énumérés précédemment.

Selon l'invention, un procédé de détection de contours en imagerie, et d'estimation locale de leurs paramètres, dans un espace à au moins trois dimensions, ces contours étant appelés hypercontours et cet espace représentant au moins une suite de j images à deux dimensions avec $j = 0$ à $m$, où $m$ est au moins égal à 1, chaque point d'image étant représenté par la valeur numérique de sa luminance, caractérisé en ce que tout hypercontour est modélisé localement par une portion d'une hypersurface $H_i$ dont les paramètres peuvent prendre un nombre $s$ de jeux de valeurs prédéterminées: $R_i$ pour $i = 1$ à $s$; et en ce qu'il consiste, successivement pour chaque point d'une image, dit point courant de l'image courante, à traiter les étapes suivantes dans un système de traitement d'information numérique:

- calculer des produits de convolution $L_j * G_{ij}$, pour $i = 1$ à $s$, et pour $j = 0$ à $m$, où $m$ est au moins égal à 1, où $L_o$ est une matrice bi-dimensionnelle formée par des valeurs de luminance des points de l'image courante au voisinage du point courant ; où $L_j$ est une matrice bi-dimensionnelle formée par des valeurs de luminance d'une image, dite $j^{ème}$ image voisine, qui précède ou qui suit l'image courante dans l'une des suites d'images ; où $G_{io}$ est une matrice bi-dimensionnelle prédéterminée telle que $| L_o * G_{io}|$ est maximale lorsque la matrice $L_o$ correspond à une portion de l'image courante représentant un segment de contour passant par le point courant et pouvant être considéré comme l'intersection du plan de l'image courante avec une hypersurface $H_i$ passant par le point courant et ayant le jeu $R_i$ pour valeurs de paramètres ; et où $G_{ij}$ est une matrice bi-dimensionnelle telle que $| L_j * G_{ij} |$ est maximale lorsque la matrice $L_j$ correspond à la portion de la $j^{ème}$ image voisine, représentant un segment de contour pouvant être considéré comme l'intersection du plan de cette $j^{ème}$ image voisine avec l'hypersurface $H_i$ ;

- calculer les valeurs $VR_i$ d'une fonction dite rapport de vraisemblance généralisée ;

$$VR_i = \left| \sum_{j=0 \text{ à } m} L_j * G_{ij} \right| \quad \text{pour } i = 1 \text{ à } s ;$$

- déterminer parmi les valeurs $VR_i$ pour $i = 1$ à $s$ la valeur $VRS$ qui est maximale ;
- comparer la valeur $VRS$ par rapport à une valeur fixée $\lambda$ ;
- conclure qu'il y a un hypercontour passant par le point courant et modélisable localement par une portion d'hypersurface ayant un jeu de valeurs de paramètres correspondant à $VRS$ si $VRS$ est supérieure à $\lambda$ et si pour $j = 0$ à $m$ toutes les valeurs

$$\left| \frac{L_o * G_{io}}{L_j * G_{ij}} \right|$$

sont comprises entre deux valeurs de seuils $\mu_1$ et $\mu_2$ choisies en fonction de la nature de l'image; sinon conclure qu'il n'y a pas d'hypercontour passant par le point courant.

L'invention sera mieux comprise et d'autres détails apparaîtront à l'aide de la description ci-dessous et des figures l'accompagnant :

- les figures 1 et 2 représentent un segment de contour en un point d'une image bi-dimensionnelle, et une portion de plan engendrée par un déplacement de ce segment de contour au cours du temps ;
- les figures 3 à 14 illustrent un exemple de mise en oeuvre du procédé selon l'invention ;
- la figure 15 et la figure 17 représentent deux parties du schéma synoptique d'un exemple de réalisation d'un dispositif pour la mise en oeuvre du procédé selon l'invention ;
- la figure 16 représente un schéma synoptique plus détaillé d'une partie de cet exemple de réalisation ;

- la figure 18 représente un organigramme illustrant le fonctionnement d'une partie de cet exemple de réalisation.

Dans un exemple de mise en oeuvre du procédé selon l'invention, appliqué à une séquence d'images, un hypercontour est modélisé localement par une portion de plan contenant un segment du contour dans le plan de l'image, modélisé pour un segment de droite, et contenant un vecteur traduisant le déplacement de ce segment, de l'image considérée à la suivante. L'intersection de ce plan avec chaque plan d'image correspond à un contour classique à deux dimensions. Ce plan sépare l'espace à trois dimensions en deux volumes où la luminance des points d'image est supposée uniforme mais affectée d'un bruit de type gaussien. Pour estimer l'orientation de ce plan il suffit de déterminer les valeurs $\theta$ et $\alpha$ de deux angles entre ce plan et deux des axes d'un repère cartésien.

Pour détecter tous les hypercontours d'une image, les points de cette image sont tous considérés successivement, dans l'ordre où ils ont été analysés.

Le point en cours de traitement à l'instant considéré est appelé point courant de l'image courante, dans ce qui suit.

Le procédé selon l'invention consiste à définir un jeu de valeurs d'orientation : $R_i = (\theta_i, \alpha_i)$ pour $i = 1$ à s, et consiste à choisir parmi ces valeurs celle qui est la plus vraisemblable en chaque point, s'il y a un hypercontour. Ce choix consiste à calculer la valeur d'une fonction dite rapport de vraisemblance généralisée pour chaque valeur d'orientation possible, puis à déterminer quelle est la valeur la plus grande de cette fonction, cette valeur indiquant l'orientation qui est vraisemblable. Une comparaison entre cette valeur la plus grande et une valeur de seuil prédéterminée permet de discriminer les points où l'on peut considérer qu'il y a un hypercontour et les points où l'on peut considérer qu'il n'y a aucun hypercontour.

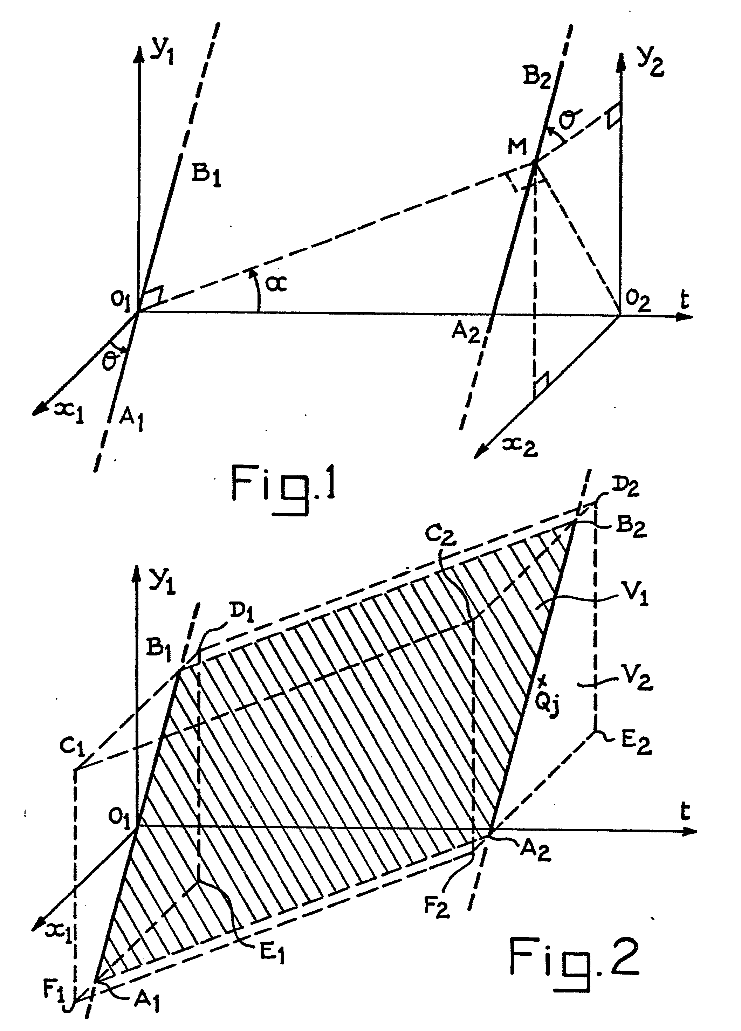

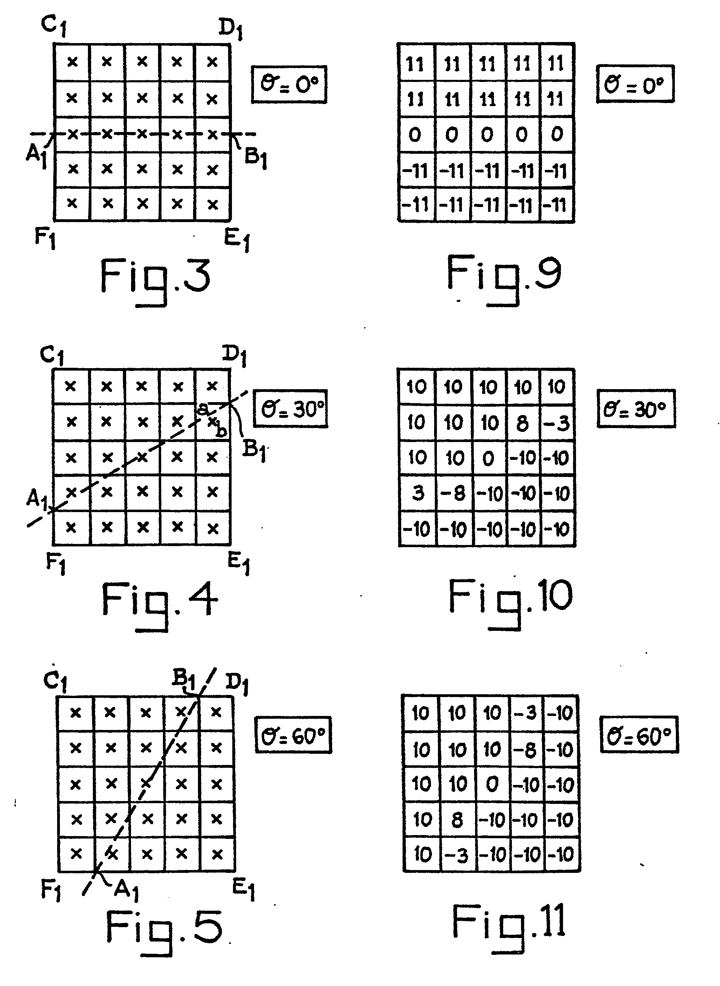

La figure 1 représente une portion de contour $A_1B_1$ en un point $o_1$ d'une première image située dans un plan repéré par des axes orthogonaux $o_1x_1$ et $o_1y_1$, et une portion de contour $A_2B_2$ en un point M d'une seconde image située dans un plan repéré par deux axes $o_2x_2$ et $o_2y_2$ parallèles respectivement aux axes $o_1x_1$ et $o_1y_1$. L'axe $o_1o_2$ constitue l'axe des temps t.

Ces deux images sont par exemple deux images successives d'une séquence d'images représentant une même scène à des instants successifs. Par hypothèse, la portion de contour $A_1B_1$ est un segment de droite centré au point $o_1$ et faisant un angle $\theta$ par rapport à l'axe $o_1x_1$ et cette portion de contour s'est déplacée en conservant la même direction dans le plan d'image. Par hypothèse, il existe donc dans la seconde image une portion de contour $A_2B_2$ qui peut être considérée comme un segment de droite faisant un angle $\theta$ avec l'axe $o_2x_2$. Ce segment ne passe pas par le point $o_2$ qui est l'homologue du point $o_1$ dans la seconde image, s'il y a un déplacement dans le plan de la seconde image.

L'hypercontour au point $o_1$ est modélisé par une portion de plan passant par ce point $o_1$, contenant le segment $A_1B_1$, et contenant le segment $A_2B_2$. Ces deux segments ne correspondent pas forcément au même point de l'objet représenté par les deux images car il peut y avoir un glissement du contour sur lui-même. Ce glissement passe inaperçu lorsque l'on ne considère pas les extrémités des contours. Ce défaut est commun à tous les procédés d'estimation locale. Le procédé prend en compte le déplacement en ne considérant que sa composante normale au segment $A_1B_1$. Dans un déplacement normal au segment $A_1B_1$, le point $o_1$ a pour homologue un point M qui est l'intersection du segment $A_2B_2$ avec un plan perpendiculaire à $A_1B_1$ au point $o_1$.

Sur la figure 1 le vecteur $o_1M$ ne représente donc pas le déplacement réel de chacun des points de la portion de contour, mais seulement la composante de ce déplacement normale à la portion de contour $A_1B_1$. L'angle $\theta$ constitue une première composante de l'orientation du plan modélisant localement l'hypercontour au point $o_1$ dans l'espace repéré par le repère $o_1x_1y_1t$. Une seconde composante de l'orientation du plan est constituée par l'angle $\alpha$ qu'il fait avec l'axe $o_1o_2t$.

L'estimation des angles $\theta$ et $\alpha$ n'est pas réalisée à partir de la connaissance préalable des portions de contour $A_1B_1$ et $A_2B_2$ détectés séparément. Le procédé selon l'invention consiste à déterminer, parmi les s plans $PL_i$ ayant respectivement les orientations $R_i$, quel est celui qui passe simultanément par un segment $A_1B_1$ et par un segment $A_2B_2$, en définissant une fonction, dite rapport de vraisemblance généralisée, et en calculant sa valeur pour chacune des valeurs possibles pour l'orientation : $R_i = (\theta_i, \alpha_i)$ pour $i = 1$ à s ; puis en déterminant pour quelle valeur $R_j$ le rapport de vraisemblance généralisée est maximal. Naturellement, les orientations $R_i$ étant discrètes, le plan ayant l'orientation $R_j$ ainsi déterminée ne passe pas toujours exactement par un segment de contour $A_2B_2$ de la seconde image. La structure d'échantillonnage de l'image est supposée orthogonale, mais cela ne limite en rien la portée de l'invention. Les points de l'image numérisée sont les centres des mailles d'échantillonnage.

Considérons les points de la première image situés au voisinage du point $o_1$, par exemple dans un carré centré sur ce point $o_1$. Pour chaque déplacement possible, c'est-à-dire pour chaque orientation $R_i$ possible, il leur correspond un ensemble de points de la seconde image, constituant un carré dont le centre est plus ou moins éloigné de $o_2$, selon la valeur de l'angle $\alpha_i$, c'est-à-dire selon l'amplitude du déplacement.

Sur la figure 2, les points du voisinage de $o_1$ sont délimités par le carré $C_1D_1E_1F_1$. Pour une certaine orientation $R_j$ tel que $\theta_j \approx \theta$ et $\alpha_j \approx \alpha$ le carré $C_2D_2E_2F_2$ délimitant les points situés au voisinage d'un

4

point $Q_j$ , contient un segment de contour $A_2B_2$ passant à peu près par le centre $Q_j$ et faisant à peu près un angle de valeur $\theta$ avec l'axe $ox_2$ . L'orientation $R_j$ est alors celle recherchée.

Les carrés $C_1D_1E_1F_1$ et $C_2D_2E_2F_2$ délimitent un volume V qui est séparé en deux parties, $V_1$ et $V_2$ , par le plan modélisant l'hypercontour et qui est hachuré sur la figure 2. S'il n'y a pas d'hypercontour au point $o_1$ , la luminance dans tout le volume V est modélisée par une loi de la forme $c_0 + b$, où $c_0$ est une constante et où b est la valeur d'un bruit gaussien centré et de variance $^2$. S'il existe un hypercontour au point $o_1$ , le plan modélisant localement cet hypercontour partage le volume V en un volume $V_1$ dans lequel la luminance est modélisée par une loi de la forme $c_1 + b$ , et en un volume $V_2$ dans lequel la luminance est modélisée par une loi de la forme $c_2 + b$, où $c_1$ et $c_2$ sont des constantes différentes.

Les points d'image contenus respectivement dans les volumes $V_1$ et $V_2$ sont en fait situés respectivement dans le carré $C_1D_1E_1F_1$ et dans le carré $C_2D_2E_2F_2$ , puisque les points d'image sont situés seulement dans les plans d'image.

Par hypothèse, la luminance des points est supposée obéir à des lois gaussiennes indépendantes. Une première fonction de vraisemblance exprimant la vraisemblance du fait que les valeurs de luminance sont égales à $c_0 + b$, c'est-à-dire la vraisemblance de l'absence d'hypercontour, est donnée par la formule classique suivante :

$$FV_0 = \frac{1}{(\sqrt{2\pi}\sigma)^n} \times \prod_{P \in V} e^{-(f(P) - c_0)^2/2\sigma^2} \qquad (1)$$

et une seconde fonction de vraisemblance exprimant la vraisemblance de l'existence d'un hypercontour séparant des points de luminance $c_1 + b$ et des points de luminance $c_2 + b$, et passant par le point considéré, est donnée par la formule classique suivante :

$$FV_1 = \frac{1}{(\sqrt{2\pi}\sigma)^n} \times \prod_{P \in V_1} e^{-(f(P)-c_1)^2/2\sigma^2} \times \prod_{P \in V_2} e^{-(f(P)-c_2)^2/2\sigma^2} \qquad (2)$$

où P est un point du volume V, f(P) est la luminance observée au point P, n est le nombre total de points contenus dans le volume V. Pour sélectionner l'hypothèse la plus vraisemblable il faut comparer les valeurs de ces deux fonctions de vraisemblance. Il suffit de considérer la valeur du logarithme du rapport de ces deux fonctions, ce rapport étant appelé rapport de vraisemblance généralisée, et de le comparer par rapport à une valeur de seuil fixée $\lambda$. Soit $LRV_1$ la valeur du logarithme du rapport des deux fonctions de vraisemblance :

$$LRV_1 = Log\left(\frac{FV_1}{FV_0}\right) = \frac{1}{2\sigma^2} \times \sum_{P \in V_1} ((f(P)-c_0)^2 - (f(P)-c_1)^2)$$

$$+ \frac{1}{2\sigma^2} \times \sum_{P \in V_2} ((f(P)-c_0)^2 - (f(P)-c_2)^2) \qquad (3)$$

$$LRV_1 = \frac{c_1-c_0}{\sigma^2} \times \sum_{P \in V_1} (f(P) - \frac{c_0+c_1}{2}) + \frac{c_2-c_0}{2} \times \sum_{P \in V_2} (f(P) - \frac{c_0+c_2}{2}) \quad (4)$$

La valeur de la fonction $LRV_1$ dépend de l'orientation du plan d'hypercontour, puisque les points appartenant au volume $V_1$ et les points appartenant au volume $V_2$ ne sont pas les mêmes quand cette orientation varie, et en outre elle dépend des valeurs $c_0$ , $c_1$ , $c_2$ . Pour une orientation donnée du plan d'hypercontour, les valeurs $c_i$ qui rendent maximale la valeur de la fonction $LRV_1$ satisfont la relation :

$$\frac{\delta LRV_1}{\delta c_i} = 0 \qquad (5)$$

On en déduit des valeurs $\hat{c_0}$, $\hat{c_1}$, $\hat{c_2}$ qui donnent une valeur maximale de la fonction LRV :

$$\hat{c_0} = \frac{1}{n} \sum_{P \in V} f(P) \; ; \; \hat{c_1} = \frac{1}{n_1} \sum_{P \in V_1} f(P) \; ; \; \hat{c_2} = \frac{1}{n_2} \sum_{P \in V_2} f(P) \qquad (6)$$

où $n_1$ est le nombre de points d'image contenus dans le volume $V_1$ et où $n_2$ est le nombre de points d'image contenus dans le volume $V_2$.

La fonction $LRV_1$ peut être écrite en fonction de $\hat{c_1}$ de $\hat{c_2}$ uniquement, en utilisant les relations suivantes déduites des relations (6) :

$$\sum_{P \in V} f(P) = n \cdot \hat{c_0} \; ; \; \sum_{P \in V_1} f(P) = n_1 \cdot \hat{c_1} \; ; \; \sum_{P \in V_2} f(P) = n_2 \cdot \hat{c_2} \qquad (7)$$

La formule (4) devient :

$$LRV_1 = \frac{n_1}{\sigma^2} \hat{c_1}(\hat{c_1} - \hat{c_0}) - \frac{n_1}{2\sigma^2} (\hat{c_1} - \hat{c_0}) \cdot (\hat{c_0} + \hat{c_1})$$

$$+ \frac{n_2}{\sigma^2} \hat{c_2}(\hat{c_2} - \hat{c_0}) - \frac{n_2}{2\sigma^2} (\hat{c_2} - \hat{c_0})(\hat{c_0} + \hat{c_2}) \qquad (8)$$

En remarquant que la valeur moyenne de la luminance dans l'ensemble du volume $V$ est $\hat{c_0}$ et est égale à

$$\frac{1}{n} (n_1 \cdot \hat{c_1} + n_2 \cdot \hat{c_2})$$

et que $n = n_1 + n_2$, la formule (8) peut être présentée sous la forme :

$$LRV_1 = \frac{n_1 \cdot n_2}{2n \cdot \sigma^2} (\hat{c_1} - \hat{c_2})^2 \qquad (9)$$

Pour déterminer l'orientation la plus vraisemblable du plan de l'hypercontour, il suffit de calculer la valeur de la fonction $LRV_1$ avec les valeurs $\hat{c_0}$, $\hat{c_1}$, $\hat{c_2}$ correspondant à chacune des orientations possibles pour le plan, puis de déterminer l'orientation qui fournit la plus grande valeur de $LRV_1$. Si cette plus grande valeur est inférieure à la valeur de seuil $\lambda$ c'est qu'il n'y a pas d'hypercontour au point considéré. La valeur de seuil $\lambda$ est ajustée en fonction de la sensibilité souhaitée pour la détection des hypercontours.

En pratique, il est plus simple de rechercher le maximum de la valeur absolue de $\hat{c_1} - \hat{c_2}$ plutôt que le maximum de son carré. D'autre part, la variance $\sigma^2$ est une constante. Dans cet exemple de mise en oeuvre du procédé selon l'invention, le rapport de vraisemblance utilisé est donc finalement :

$$LRV_2 = \sqrt{\overline{\frac{n_1 \cdot n_2}{2n}}} \cdot \left| \hat{c}_1 - \hat{c}_2 \right| \qquad (10)$$

Le nombre $n_1$ de points contenus dans le volume $V_1$ et le nombre $n_2$ de points contenus dans le volume $V_2$ sont faciles à déterminer et sont constants pour une orientation donnée, quel que soit le point où l'hypercontour est en cours de détection et d'estimation. Sur la figure 2, les points qui correspondent à $n_1$ sont les points situés dans les carrés $C_1D_1E_1F_1$ et $C_2D_2E_2F_2$ au-dessus du plan d'hypercontour représenté par des hachures. Les points correspondant à $n_2$ sont situés dans les carrés $C_1D_1E_1F_1$ et $C_2D_2E_2F_2$ au-dessous du plan d'hypercontour. La mise en oeuvre du procédé se réduit donc au calcul de :

$$LRV_2 = \left| \sqrt{\frac{n_1 \cdot n_2}{2n}} \cdot \hat{c}_1 - \sqrt{\frac{n_1 \cdot n_2}{2n}} \cdot \hat{c}_2 \right| \qquad (11)$$

en fonction des valeurs de luminance $f(P)$ des points P appartenant aux carrés $C_1D_1E_1F_1$ et $C_2D_2E_2F_2$.

D'après les formules (6) $LRV_2$ peut être écrit sous la forme suivante :

$$LRV_2 = \left| \sqrt{\frac{n_1 \cdot n_2}{2n}} \sum_{P \in V_1} \frac{1}{n_1} \cdot f(P) - \sqrt{\frac{n_1 \cdot n_2}{2n}} \sum_{P \in V_2} \frac{1}{n_2} \cdot f(P) \right| \qquad (12)$$

$$= \left| \sum_{P \in V} a_j(P).f(P) \right| \qquad (13)$$

$$\text{où} \qquad a_j(P) = \sqrt{\frac{n_2}{2n.n_1}} \quad \text{si } P \in V_1$$

$$\text{et} \qquad a_j(P) = -\sqrt{\frac{n_1}{2n.n_2}} \quad \text{si } P \in V_2 \qquad (14)$$

Dans ce qui suit on notera

$$\sqrt{\frac{n_2}{2n.n_1}}$$

par $k_1$ et

$$\sqrt{\frac{n_1}{2n.n_2}}$$

par $k_2$.

L'expression (13) peut être redécomposée en une somme de deux termes respectivement fonctions uniquement des valeurs de luminance de la première image et uniquement des valeurs de luminance de la seconde image :

$$LRV_2 = \left| \sum_{P \in C_1D_1E_1F_1} a_j(P).f(P) + \sum_{P \in C_2D_2E_2F_2} a_j(P).f(P) \right| \qquad (15)$$

7

Le premier terme peut être considéré comme le produit de convolution d'une matrice carrée L constituée par les valeurs de luminance de tous les points du carré $C_1D_1E_1F_1$ et d'une matrice $G_i$ comportant deux parties, une première partie ayant des coefficients égaux à $k_1$ pour les indices correspondant aux abscisses et aux ordonnées des points du volume $V_1$ et une seconde partie ayant des coefficients tous égaux à $k_2$ pour les indices correspondant aux ordonnées et aux abscisses des points du volume $V_2$.

De même, le second terme peut être considéré comme le produit de convolution d'une matrice carrée L' constituée par les valeurs de luminance de tous les points du carré $C_2D_2E_2F_2$ et d'une matrice $G'_i$ comportant deux parties, une première partie ayant des coefficients tous égaux à $k_1$ pour les indices correspondant aux abscisses et aux ordonnées des points du volume $V_1$, et une seconde partie ayant des coefficients tous égaux à $k_2$ pour les indices correspondant aux abscisses et aux ordonnées correspondant aux points du volume $V_2$. Le couple de matrices ($G_i$, $G'_i$) est appelé masque de convolution et les matrices $G_i$ et $G'_i$ sont appelées sous-masques.

Le sous-masque $G_i$ est une matrice telle que $| L * G_i|$ est maximal lorsqu'une matrice L correspond à une portion de l'image courante représentant un segment de contour passant par le point courant et pouvant être considéré comme l'intersection du plan de l'image courante avec un plan $PL_i$ passant par le point courant et ayant l'orientation $R_i = (\theta_i, \alpha_i)$. Le sous-masque $G'_i$ est une matrice telle que $| L'* G'_i|$ est maximal lorsqu'une matrice L' correspond à une portion de l'image suivante, représentant un segment de contour pouvant être considéré comme l'intersection du plan de cette image suivante avec le plan $PL_i$. En pratique les coefficients des matrices $G_i$ et $G'_i$ peuvent être multipliés par une constante A, et être de la forme: $A.k_1$ et $A.k_2$ ; cependant cette constante A doit être la même pour toutes les matrices $G_i$ et $G'_i$ pour pouvoir calculer correctement les valeurs du rapport de vraisemblance généralisée données par la formule (15).

La recherche de l'orientation du plan modélisant l'hypercontour consiste alors à :
- calculer des valeurs $VR_i$, pour i = 1 à s, de la fonction $LRV_2$ correspondant aux s orientations $R_i$ prédéterminées ;
- déterminer la valeur maximale, notée VRS, parmi ces valeurs $VR_i$ ;
- conclure que l'orientation de l'hypercontour est celle correspondant à VRS, si VRS est supérieure à $\lambda$. Sinon, il faut conclure qu'il n'y a pas d'hypercontour au point considéré.

D'autre part, pour éliminer les fausses détections, en pratique une détection n'est pas validée si

$$\left| \frac{L * G_i}{L' * G'_i} \right|$$

n'est pas compris entre deux valeurs de seuil $\mu_1$ et $\mu_2$ choisies en fonction de la nature des images.

Si on fait l'hypothèse que tout déplacement d'un segment de contour d'une image à la suivante correspond toujours à un nombre entier de mailles sur les axes $o_2x_2$, $o_2y_2$, alors le plan de l'hypercontour coupe les carrés $C_1D_1E_1F_1$ et $C_2D_2E_2F_2$ en des points qui sont homologues à une translation près et les matrices $G_i$ et $G'_i$ sont alors identiques.

Les figures 3 à 8 représentent le carré $C_1D_1E_1F_1$ dans un exemple où ce carré délimite un voisinage de $5 \times 5$ mailles autour du point considéré pour la détection et l'estimation d'un hypercontour, et elles représentent la position du segment de contour $A_1B_1$ pour six valeurs prédéterminées de l'angle $\theta$ : 0°, 30°, 60°, 90°, 120°, 150°. Le nombre de mailles situées dans le carré étant un nombre impair, le segment $A_1B_1$ passe par le centre d'une maille située au centre du carré $C_1D_1E_1F_1$. Sur ces figures le centre de chaque maille est représenté par une croix.

Les figures 9 à 14 représentent les matrices $G_i$ constituant les sous-masques pour la détection des segments de contour $A_1B_1$ représentés respectivement sur les figures 3 à 8. Dans l'hypothèse où tout déplacement du segment de contour dans la seconde image correspond à un nombre entier de mailles sur l'axe $o_2x_2$ et sur l'axe $o_2y_2$, alors la position des segments de contours $A_2B_2$ par rapport au carré $C_2D_2E_2F_2$ est identique à la position du segment $A_1B_1$ dans le carré $C_1D_1E_1F_1$ représenté sur les figures 3 à 8 et les matrices $G'_i$ correspondantes sont identiques aux matrices $G_i$ représentées sur les figures 9 à 14.

A chaque maille du carré $C_1D_1E_1F_1$, ou du carré $C_2D_2E_2F_2$, correspond un coefficient de la matrice $G_i$ traduisant l'appartenance de cette maille au volume $V_1$ ou au volume $V_2$. En principe, tous les points situés dans le volume $V_1$ correspondent à un coefficient de valeur $k_1$ d'après la formule (14) et tous les points appartenant au volume $V_2$ correspondent à des coefficients de valeurs $k_2$. Mais, en pratique, se présentent trois cas :
- la maille considérée n'est pas coupée par le segment $A_1B_1$ ;
- la maille considérée est coupée par le segment $A_1B_1$ et celui-ci passe au centre de la maille, qui correspond à un point de la structure d'échantillonnage ;
- la maille considérée est coupée par le segment $A_1B_1$ mais celui-ci ne passe pas au centre.

Pour les mailles qui ne sont pas coupées par le segment de contour $A_1B_1$, les formules précédentes sont applicables sans difficulté, cependant les valeurs sont multipliées par 100 et arrondies aux valeurs entières les plus proches pour éviter des valeurs décimales.

Lorsque le segment $A_1B_1$ passe par le centre de la maille, comme c'est le cas pour cinq mailles sur la figure 3, le coefficient est pris égal à zéro et la maille n'est pas comptée dans les nombres $n$, $n_1$ et $n_2$.

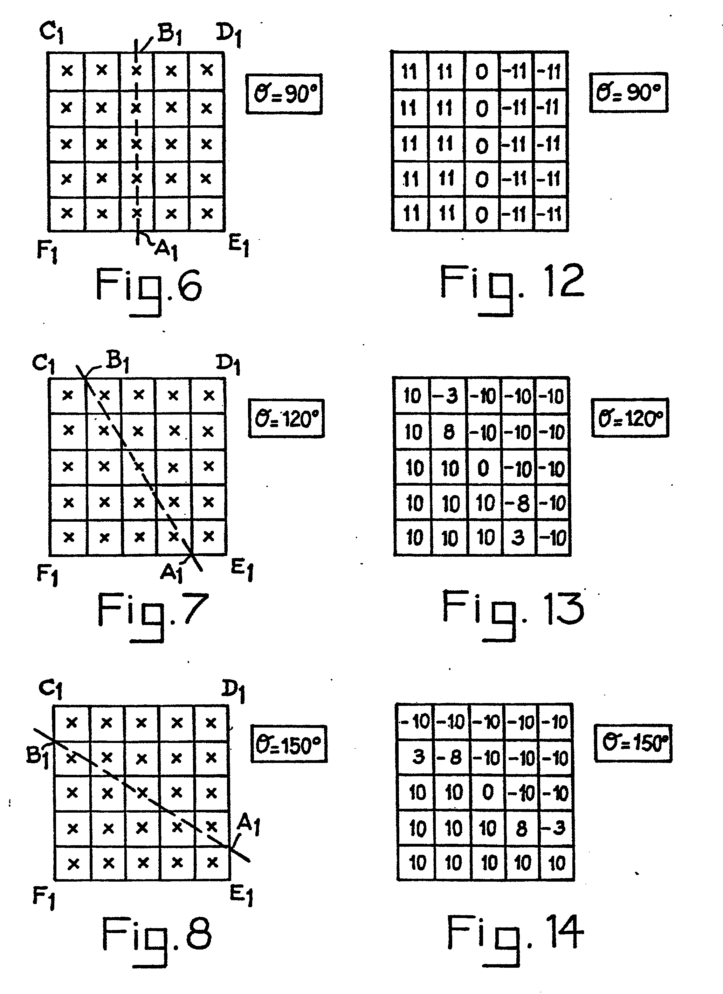

Lorsque le segment $A_1B_1$ ne passe pas par le centre de la maille qu'il coupe, comme c'est le cas par exemple à la deuxième ligne de la dernière colonne à droite sur la figure 4, le coefficient est calculé selon la formule :

$$100 \times k_1 \times \left| \frac{a-b}{a+b} \right| \quad \text{si } a > b \qquad (16)$$

$$100 \times -k_2 \times \left| \frac{a-b}{a+b} \right| \quad \text{si } a < b \qquad (17)$$

où $\underline{a}$ est l'aire de la portion de maille se trouvant dans le volume $V_1$ et où $\underline{b}$ est l'aire de la portion de maille se trouvant dans le volume $V_2$, comme représentés sur la figure 4. Ainsi, le coefficient est positif si la maille correspondante a une plus grande aire située dans $V_1$ que dans $V_2$, et réciproquement.

Il est à noter aussi que la valeur de $n$ est calculée en tenant compte des fractions de maille. Si une maille est coupée en deux, elle est comptée pour la valeur

$$\left| \frac{a-b}{a+b} \right|$$

dans $n_1$, si l'aire $\underline{a}$ est supérieure à l'aire $\underline{b}$, sinon elle est comptée pour la valeur

$$\left| \frac{a-b}{a+b} \right|$$

dans $n_2$. Une maille qui n'est pas coupée compte pour 1 dans $n_1$ ou $n_2$, selon qu'elle est située dans $V_1$ ou $V_2$, $n$ est calculé ensuite en additionnant $n_1$ et $n_2$.

Par exemple, sur la figure 3 le segment $A_1B_1$ passe par une médiatrice horizontale du carré $C_1D_1E_1F_1$, par conséquent les cinq coefficients correspondant à cette médiatrice sont nuls. Les coefficients non nuls dans le volume $V_1$ ont pour nombre $n_1 = 20$, compte tenu du carré $C_2D_2E_2F_2$. De même, les coefficients non nuls situés dans le volume $V_2$ ont pour nombre $n_2 = 20$. Donc $n = 40$. Ces coefficients ont pour valeurs : $100 \times k_1 = 25$ et $- 100 \times k_2 = - 11$ (voir la figure 9).

Sur la figure 4, le segment $A_1B_1$ passe par le centre de la maille au centre du carré $C_1D_1E_1F_1$, c'est donc une maille pour laquelle le coefficient est nul. Il y a 6 mailles qui sont coupées en deux par le segment $A_1B_1$. Pour chacune il faut déterminer les aires $\underline{a}$ et $\underline{b}$ à partir de la valeur $\theta = 30°$.

Le nombre de mailles dont la majeure partie est dans le volume $V_1$ est $n_1 = 23,31$ et par raison de symétrie le nombre de mailles dont la majeure partie est dans le volume $V_2$ est $n_2 = 23,31$. Le nombre de mailles correspondant à des coefficients non nuls est donc $n = n_1 + n_2 = 46,62$. Les valeurs des coefficients correspondant aux mailles non coupées sont donc $\pm 10$. Les valeurs des coefficients correspondant aux mailles coupées sont $\pm 8$ et $\pm 3$. Toutes ces valeurs sont représentées sur la figure 13.

Les figures 11 à 14 représentent les sous-masques pour les autres valeurs de $\theta$. Les valeurs des coefficients sont les mêmes mais à des emplacements différents, à cause des propriétés de symétrie des positions du segment $A_1B_1$ dans ces différents cas.

Il est à remarquer que dans le cas où le voisinage considéré est un carré de dimensions paires, $4 \times 4$ mailles par exemple, le point considéré pour la détection d'un hypercontour et l'estimation de ses paramètres n'est plus au centre d'une maille mais à la jonction de quatre mailles et il n'y a plus de coefficients nuls dans les sous-masques.

Si on ne fait pas l'hypothèse que les déplacements correspondent à des nombres entiers de mailles sur les axes $o_2x_2$ et $o_2y_2$, le calcul des coefficients est réalisé selon les mêmes formules que pour le carré $A_1B_1C_1D_1$ mais le segment $A_2B_2$ ne coupe plus le carré $C_2D_2E_2F_2$ de manière identique, ce qui modifie les valeurs $\underline{a}$ et $\underline{b}$.

Dans le repère $o_1x_1y_1t$ le déplacement $o_1M$ perpendiculaire au segment $A_1B_1$ est donné par le vecteur $(-\tau.\sin\theta.\text{tg } \alpha, \tau.\cos\theta.\text{tg}\alpha, \tau)$ où $\tau$ est l'intervalle de temps séparant les deux images. Sur la figure 1, $\tau$ est égal à la longueur $o_1o_2$ et le vecteur déplacement est le vecteur $o_1 M$. En pratique, l'orientation du plan de contour est exprimée non par les valeurs de $\theta$ et $\alpha$, mais par la valeur de $\theta$ et des coordonnées du point M dans le repère $o_2x_2y_2$, ces coordonnées étant données par les formules suivantes :

$\Delta x = - \tau.\sin \theta . \text{tg}. \alpha$

$\Delta y = \tau . \cos \theta . \text{tg } \alpha \quad (18)$

EP 0 219 435 B1

En pratique, le procédé consiste donc à prévoir un certain nombre de valeurs possibles pour $(\Delta x, \Delta y)$ au lieu de prévoir des valeurs de $\alpha$. Par exemple, pour la valeur $\theta = 0°$, les valeurs du déplacement, exprimés en nombre de lignes et en nombres de colonnes, sont les suivantes : (-7,0), (-6,0), (-5,0), (-4,0), (-3,0), (-2,0), (-1,0), (0,0), (1,0), (2,0), (3,0), (4,0), (5,0), (6,0), (7,0) ; les lignes étant comptées dans la direction opposée à $o_1y_1$ et les colonnes étant comptées dans la direction $o_1x_1$.

Pour les mêmes valeurs $\alpha$, mais pour $\theta = 30°$, les valeurs du déplacement sont, en arrondissant à la valeur entière la plus proche :
(7,4), (5,3), (4,2), (3,2), (2,1), (1,1), (0,0), (-1,-1), (-2,-1), (-3,-2), (-4,-2), (-5,-3), (-6,-3), (-7,-4).

Dans le cas où la suite d'images considérée ne correspond pas à des instants différents mais à des coupes successives d'un même objet, le calcul des sous-masques reste inchangé, la distance séparant les repères des deux images étant alors une dimension spatiale et non plus une dimension temporelle. Les deux images considérées ne sont pas successives dans le temps mais sont immédiatement voisines dans l'espace.

Dans le cas d'un espace à quatre dimensions représentant deux suites d'images qui sont constituées de deux ensembles de coupes d'un objet, chaque ensemble correspondant à un instant distinct, le procédé selon l'invention consiste à réaliser les opérations décrites précédemment pour deux images voisines d'un premier ensemble, d'une part, et pour deux images voisines d'un second ensemble, d'autre part. Ceci permet d'estimer le déplacement d'une portion de plan, et non plus d'un segment, dans la direction perpendiculaire au plan, entre le premier et le second ensemble. Dans ce cas, il y a un masque pour chaque jeu de valeurs de paramètres de l'hypersurface, chaque masque étant constitué de deux sous-masques permettant de détecter deux portions de plan constituées par les intersections de l'hypersurface avec chacun des deux ensembles d'images, et chaque sous-masque étant constitué de deux sous-sous-masques permettant de détecter les intersections de ces portions de plan avec les plans d'images. Les quatre sous-sous-masques utilisés, $G_{i0}$, $G_{i1}$, $G_{i2}$, $G_{i3}$, sont identiques à ceux utilisés pour une suite unique d'images à deux dimensions si le déplacement correspond à un nombre entier de mailles. Le rapport de vraisemblance généralisée a alors pour valeur :

$$VR_i = \left| \sum_{j=0 \text{ à } 3} L_j * G_{ij} \right|$$

pour i = 1 à s. Comme pour le cas d'un espace à trois dimensions, le procédé consiste ensuite à : déterminer pour quel jeu $R_i$ de valeurs de paramètres le rapport prend une valeur maximale VRS ; puis à comparer VRS à une valeur de seuil $\lambda$ ; conclure qu'il y a un hypercontour passant par le point courant et modélisable localement par une portion d'hypersurface ayant un jeu de valeurs de paramètres correspondant à VRS si VRS est supérieure à $\lambda$ et si pour j = 0 à 3 toutes les valeurs

$$\left| \frac{L_0 * G_{i0}}{L_j * G_{ij}} \right|$$

sont comprises entre deux valeurs de seuils $\mu_1$ et $\mu_2$ choisies en fonction de la nature des images ; sinon conclure qu'il n'y a pas d'hypercontour passant par le point courant. Le déplacement est exprimé par trois composantes spatiales : $\Delta x$, $\Delta y$, $\Delta z$, au lieu de deux, et une composante temporelle.

Il est à noter que le voisinage considéré autour d'un point, pour détecter et estimer un hypercontour en ce point, peut ne pas être carré mais rectangulaire. Le procédé de calcul des coefficients des sous-masques est inchangé.

Il est possible aussi de détecter un hypercontour et d'estimer ses paramètres dans un espace à trois dimensions en considérant l'intersection de cet hypercontour avec non pas deux mais trois images successives, voir même plus. De même, il est possible de détecter un hypercontour et d'estimer ses paramètres dans un espace à quatre dimensions en considérant l'intersection de cet hypercontour avec non pas quatre, mais six images, voire même plus. Cette variante du procédé est particulièrement adaptée pour les hypersurfaces plus complexes que le plan, ou bien pour la détection des hypercontours à trois dimensions spatiales. Dans le cas d'une seule suite d'images, le masque est alors constitué de trois sous-masques $G_{i0}$, $G_{i1}$, $G_{i2}$ appliqués chacun à une image. Si on fait l'hypothèse que les valeurs $\alpha_i$ possibles pour l'orientation $\alpha$ de l'hypercontour correspondent à des valeurs entières des composantes $\Delta x$ et $\Delta y$ exprimant le déplacement d'une image à la suivante, alors les coefficients sont les mêmes pour chaque sous-masque et ils sont égaux à ceux des deux sous-masques $G_i$, $G'_i$ utilisés lorsque deux images seulement sont considérées.

Selon cette variante, le procédé consiste à :
- calculer pour i = 1 à s, des produits de convolution $L_0 * G_{i0}$, $L_1 * G_{i1}$, et $L_2 * G_{i2}$, où $L_0$ est une matrice bidimensionnelle formée par des valeurs de luminance des points voisins du point courant dans l'image

courante, où $L_1$ et $L_2$ sont deux matrices bi-dimensionnelles formées par des valeurs de luminance de deux images voisines de l'image courante dans la suite d'images, en précédant ou en suivant l'image courante, où les matrices $G_{i0}$, $G_{i1}$ et $G_{i2}$ sont des matrices bidimensionnelles prédéterminées et telles que respectivement $| L_0 * G_{i0} |$, $| L_1 * G_{i1} |$, $| L_2 * G_{i2} |$ est maximal lorsque respectivement $L_0$, $L_1$, $L_2$ correspond à une portion d'image représentant un segment de contour pouvant être considéré comme l'intersection du plan de cette portion d'image avec le plan ayant l'orientation $R_i$ et passant par le point courant ;
- calculer les valeurs $VR_i$ du rapport de vraisemblance généralisée selon la formule :
$VR_i = L_0 * G_{i0} + L_1 * G_{i1} + L_2 * G_{i2}$ pour i = 1 à s ;
- déterminer parmi les valeurs $VR_i$ pour i = 1 à s, la valeur maximale VRS ;
- comparer la valeur VRS avec une valeur fixée $\lambda$;
- conclure qu'il y a un hypercontour passant par le point courant et modélisable localement par une portion de plan ayant une orientation correspondant à VRS si VRS est supérieure à et si les valeurs

$$\left| \frac{L_o * G_{io}}{L_1 * G_{i1}} \right| \quad et \quad \left| \frac{L_o * G_{io}}{L_2 * G_{i2}} \right|$$

sont comprises entre deux valeurs de seuil prédéterminées $\mu_1$ et $\mu_2$ choisies en fonction de la nature des images ; sinon conclure qu'il n'y a pas d'hypercontour passant par le point courant.

Dans le cas où le déplacement ne correspond pas à un nombre entier de mailles, les sous-masques $G_{i0}$, $G_{i1}$ et $G_{i2}$ sont calculés en appliquant les formules (16) et (17) citées précédemment.

Un perfectionnement au procédé selon l'invention consiste à affiner la détection des hypercontours, après avoir appliqué le procédé décrit précédemment à tous les points au voisinage du point courant, c'est-à-dire avec un retard correspondant à quelques lignes d'images. Cet affinage consiste à comparer la valeur du rapport de vraisemblance $LRV_2$ au point considéré avec la valeur de ce même rapport en deux points immédiatement voisins du point considéré mais situés de part et d'autre du contour détecté, sur la perpendiculaire au segment. Si la valeur du rapport de vraisemblance généralisée en l'un des deux points voisins est strictement supérieure à la valeur du rapport de vraisemblance généralisée au point considéré il faut conclure que l'hypercontour, en fait, ne passe pas au point considéré mais passe par un point voisin.

Le procédé selon l'invention n'est pas limité aux hypersurfaces du type plan, toute hypersurface de type surface réglée peut être utilisée pour modéliser les hypercontours. Cela permet de modéliser un segment de contour dans une image par une portion de courbe autre qu'un segment de droite. Par exemple, les hypercontours peuvent être modélisés par des surfaces cylindriques, les segments de contour dans l'image étant alors modélisés par des arcs de cercle. Cela permet aussi de modéliser les déplacements non plus par une simple translation mais par une translation combinée à une rotation. Ces modélisations plus complexes sont plus précises mais nécessitent de considérer des voisinages plus grands et un nombre d'images plus grand. Elles sont choisies en fonction de la nature des images à traiter.

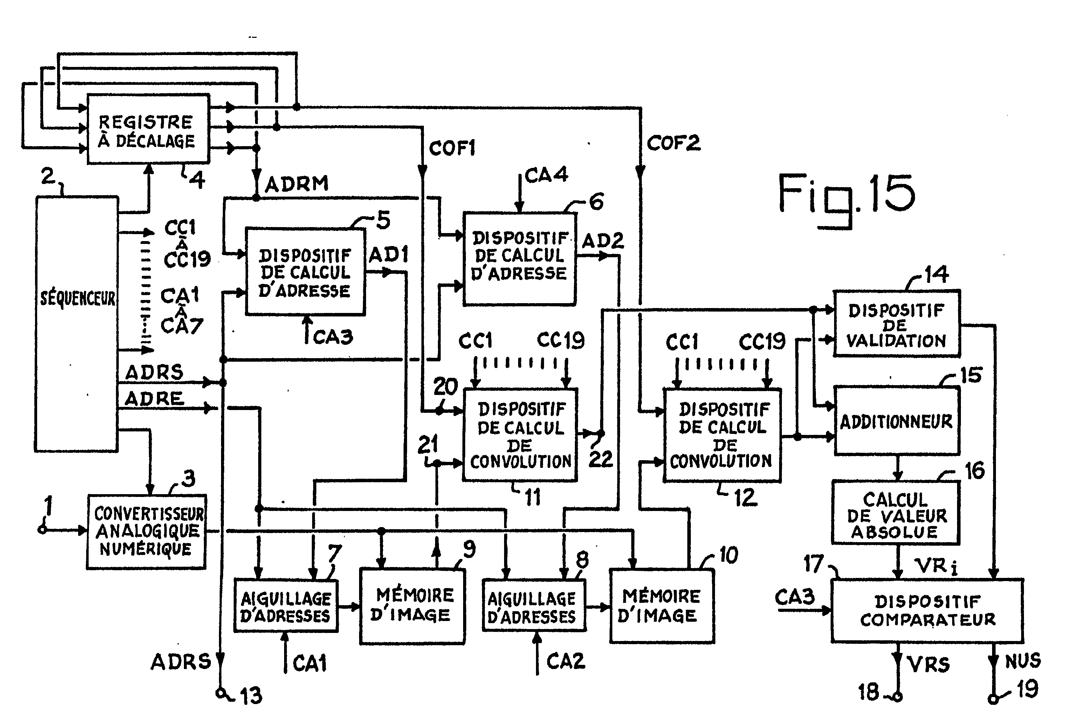

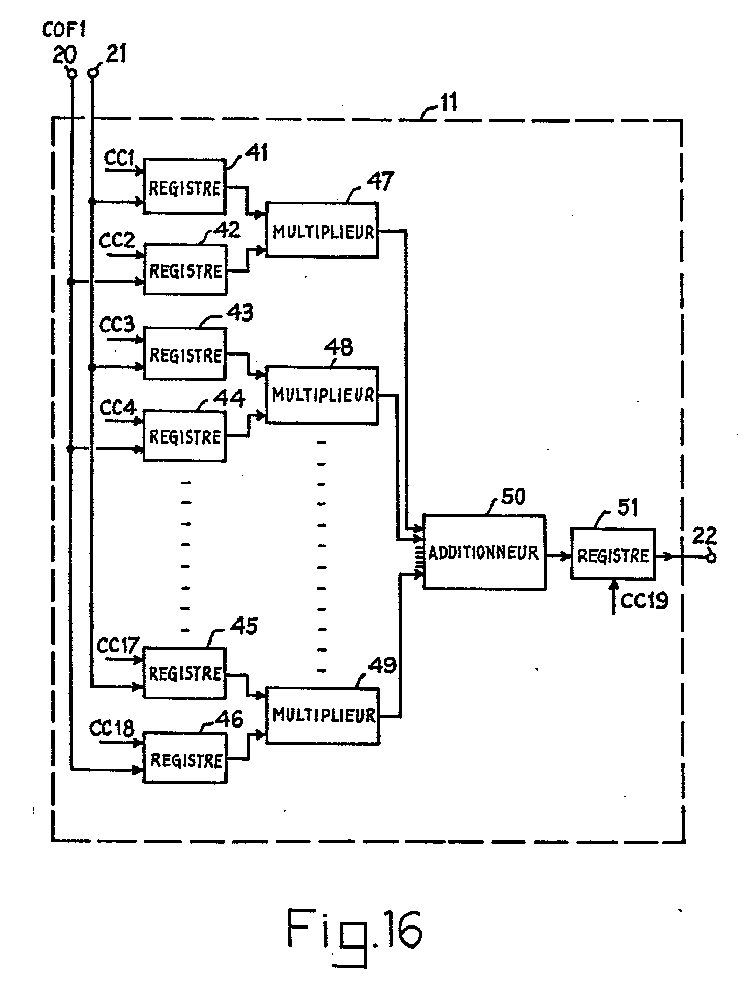

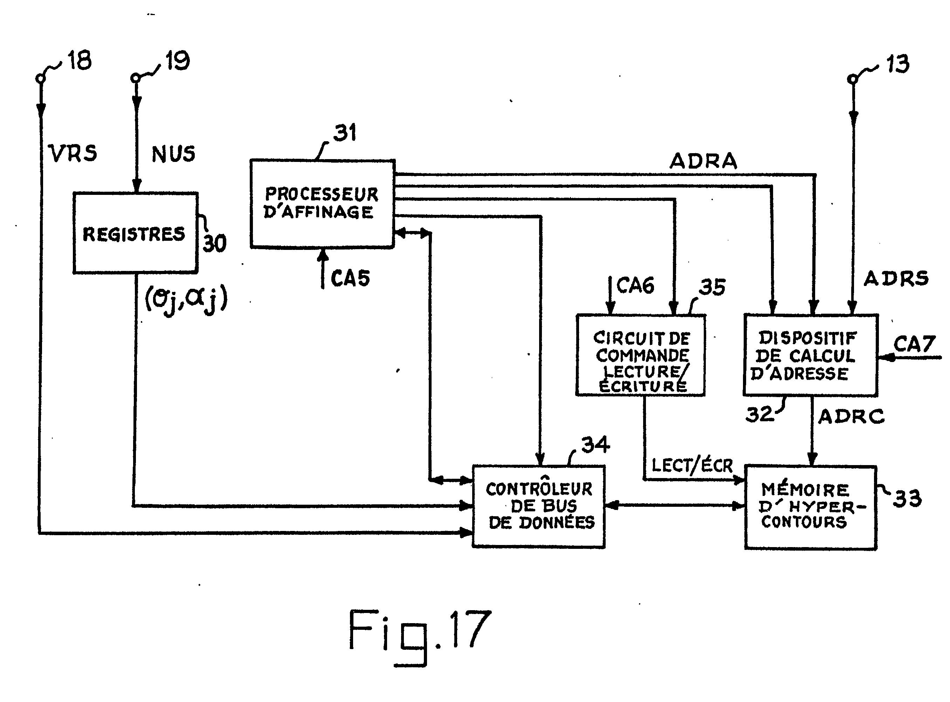

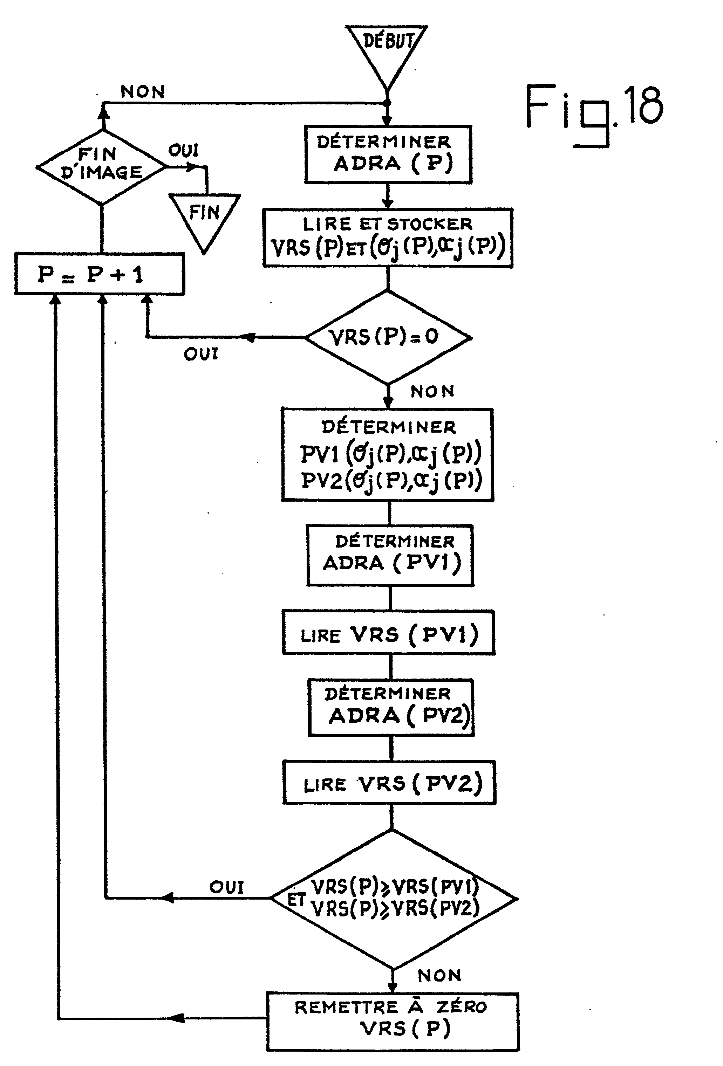

Les figures 15 et 16 représentent le schéma synoptique d'un exemple de réalisation du dispositif selon l'invention pour la mise en oeuvre du procédé selon l'invention, appliqué à un espace à trois dimensions. Dans cet exemple, les images traitées sont une suite d'images bi-dimensionnelles d'un même objet à différents instants successifs et deux images seulement sont prises en compte pour la mise en oeuvre du procédé.

La figure 15 représente une première partie de cet exemple de réalisation, qui comporte : une borne d'entrée 1 recevant un signal de luminance sous forme analogique ; un séquenceur 2 ; un convertisseur analogique-numérique 3 ; un ensemble de registres à décalage 4 ; deux dispositifs de calcul d'adresses 5 et 6 ; deux dispositifs d'aiguillage d'adresses 7 et 8 ; deux mémoires d'image 9 et 10 ; deux dispositifs de calcul de convolution 11 et 12 ; un dispositif de validation 14 ; un additionneur 15 ; un dispositif de calcul de valeur absolue 16 ; un dispositif comparateur 17 ; et trois bornes de sortie 13, 18, 19 reliées à une seconde partie de cet exemple de réalisation.

Le convertisseur 3 possède une entrée reliée à la borne 1 et possède une sortie reliée à une entrée de données de chacune des mémoires d'image 9 et 10. La mémoire 9 et la mémoire 10 permettent de stocker respectivement les valeurs numériques de luminance d'une première et d'une seconde image. La première image est celle pour laquelle la détection des hypercontours est en cours de réalisation à l'instant considéré. Elle est appelée image courante dans ce qui suit. La seconde image est appelée image suivante car c'est l'image suivant immédiatement l'image courante. Ultérieurement la seconde image deviendra image courante et les rôles des deux mémoires 9 et 10 seront permutés. De même, les rôles des aiguillages 7 et 8 seront permutés. Cet exemple de réalisation ayant à traiter une suite d'images, il est nécessaire d'inscrire de nouvelles valeurs de luminance dans la mémoire contenant celles de l'image courante, avec un retard de deux lignes par rapport au traitement du point en cours de traitement, qui est appelé point courant. Une sortie de données de la mémoire 9 est reliée à une entrée du dispositif de calcul de convolution 11, par une borne d'entrée 21, et une sortie de données de la mémoire 10 est reliée à une entrée du dispositif de calcul de convolution 12.

Une entrée d'adresse de la mémoire 9 et une entrée d'adresse de la mémoire 10 sont reliées respectivement à une sortie du dispositif d'aiguillage d'adresses 7 et à une sortie du dispositif d'aiguillage d'adresses 8. Une première entrée du dispositif d'aiguillage d'adresses 7 et une première entrée du dispositif d'aiguillage d'adresses 8 sont reliées respectivement à une sortie du dispositif de calcul d'adresses 5 fournissant une adresse AD1, et à une sortie du dispositif du calcul d'adresses 6 fournissant une adresse AD2. Une seconde entrée du dispositif 7 et une seconde entrée du dispositif 8 sont reliées à une sortie du séquenceur 2 fournissant une adresse ADRE. Une entrée du dispositif de calcul d'adresses 5, une entrée du dispositif de calcul d'adresse 6, et la borne de sortie 13 sont reliées à une sortie du séquenceur 2 fournissant une valeur d'adresse ADRS, correspondant au point courant. Dans cet exemple, les voisinages considérés sont des carrés de $3 \times 3$ points.

Les dispositifs d'aiguillage d'adresses 7 et 8 possèdent chacun une entrée de commande reliées respectivement à des sorties du séquenceur 2. Ces entrées de commande reçoivent respectivement des signaux de commande CA1 et CA2. Le dispositif d'aiguillage 7 ou 8 qui correspond à la mémoire 9 ou 10 contenant l'image courante à l'instant considéré transmet alternativement une adresse pour écrire une valeur de luminance de l'image suivant l'image qui suit l'image suivante et une adresse pour lire une valeur de luminance de l'image courante. Par exemple, si la mémoire 9 contient les valeurs de luminance de l'image courante à l'instant considéré l'aiguillage 7 transmet alternativement une adresse ADRE pour écrire une valeur de luminance de l'image qui suit l'image suivante et une adresse AD1 pour lire une valeur de luminance de l'image courante. Pendant ce temps, l'aiguillage 8 transmet une adresse AD2 pour lire une valeur de luminance de l'image suivante dans la mémoire 10. Les dispositifs de calcul d'adresse 5 et 6 calculent respectivement une adresse AD1 = ADRS + ADRV,

et une adresse AD2 = ADRS + ADRM + ADRV ;

ADRM étant un complément d'adresse fourni par le registre 4 et correspondant à un déplacement $\Delta x$, $\Delta y$, c'est-à-dire à une valeur $\alpha_i$ ; et ADRV étant un complément d'adresse déterminé par le dispositif 6 et correspondant à un point voisin du point courant dans un carré de $3 \times 3$ points.

L'ensemble de registres à décalage 4 est formé de trois registres à décalage commandés par un même signal d'horloge fourni par une sortie du séquenceur 2 et ayant chacun une sortie et une entrée série qui sont rebouclées. La sortie d'un premier registre à décalage est reliée, par une borne d'entrée 20, à une entrée du dispositif de calcul de convolution 11, la sortie d'un second registre est reliée à une entrée du dispositif de calcul de convolution 12, et la sortie d'un troisième registre est reliée à une entrée du dispositif de calcul d'adresse 5 et à une entrée du dispositif du calcul d'adresse 6.

Les dispositifs de calcul de convolution 11 et 12 possèdent chacun 18 entrées de commande qui sont reliées respectivement à 18 sorties du séquenceur 2. Une borne de sortie 22 du dispositif de calcul de convolution 11 es reliée à une entrée du dispositif de validation 14 et à une entrée de l'additionneur 15. Une sortie du dispositif de calcul de convolution 12 est reliée à une entrée du dispositif de validation 14 et à une entrée de L'additionneur 15. Une sortie de l'additionneur 15 est reliée à une entrée du dispositif 16 de calcul de valeur absolue. Une sortie du dispositif de validation 14 est reliée à une entrée du dispositif comparateur 17. Le dispositif 17 possède une entrée reliée à une sortie du dispositif de calcul 16, une entrée de commande reliée à une sortie du séquenceur 2, et deux sorties reliées repectivement aux deux bornes de sortie 18 et 19.

Les trois registres à décalage 4 stockent respectivement:
- les valeurs COF1 des coefficients d'un premier sous-masque pour chacune des valeurs d'orientation $(\alpha_i , \theta_i)$;
- les valeurs COF2 des coefficients d'un second sous-masque pour chacune des valeurs d'orientation $(\alpha_i, \theta_i)$ ;
- les valeurs ADRM des compléments d'adresses, correspondant aux diverses valeurs de déplacement $(\Delta x, \Delta y)$ qui correspondent elles-mêmes aux diverses valeurs $\alpha_i$.

Dans cet exemple de réalisation les coefficients COF1 et COF2 sont distincts car les composantes $\Delta x$ et $\Delta y$ du déplacement ne sont pas supposées correspondre à un nombre entier de mailles. Les sous-masques comportent chacun neuf coefficients et il y a 75 masques correspondant à 5 valeurs $\theta_i$ et 15 valeurs $\alpha_i$.

Ces valeurs circulent en permanence à l'intérieur des registres à décalage 4 afin de permettre les calculs de convolution correspondant à chacune des orientations possibles pour chaque point successivement. Les points de chaque image sont traités successivement dans l'ordre où les valeurs de luminance sont appliquées à la borne d'entrée 1, c'est-à-dire point par point pour chaque ligne et ligne après ligne.

Les valeurs résultant des calculs de convolution effectués par les dispositifs 11 et 12 sont validés par le dispositif de validation 14. Celui-ci calcule la valeur absolue du rapport des deux produits de convolution puis compare cette valeur absolue par rapport à deux valeurs de seuil $u_1$ et $u_2$ prédéterminées, par exemple 0,75 et 1,25, et il fournit un signal logique de validation au dispositif comparateur 17 lorsque la valeur absolue de ce rapport est comprise entre les deux valeurs de seuil. L'additionneur 15 calcule la somme des deux produits de convolution calculés par les dispositifs 11 et 12 et fournit cette somme au dispositif 16 de calcul de valeur absolue. La sortie du dispositif 16 fournit une valeur $VR_i$ du rapport de vraisemblance généralisée $LRV_2$ pour le point courant, conformément à la formule (15). Les valeurs des deux produits de convolution ne sont pas considérées comme valides lorsqu'elles diffèrent beaucoup

EP 0 219 435 B1

car, dans ce cas là, la détection d'un hypercontour et l'estimation de ces paramètres sont souvent fausses.

Sous l'action d'un signal de commande CA3 fourni par le séquenceur 2, le dispositif comparateur 17 stocke successivement les valeurs $VR_i$ du rapport de vraisemblance généralisée pour i = 1 à 75, c'est-à-dire pour les différentes valeurs d'orientation possibles, au point courant. Le dispositif 17 ne tient pas compte des valeurs qui ne sont pas validées par le dispositif 14. Chaque nouvelle valeur $VR_i$ est comparée avec la plus grande valeur détectée précédemment par le dispositif 17 pour le même point courant.

Lorsque toutes les valeurs $VR_i$ ont été comparées, pour un même point courant, le dispositif 17 fournit la plus grande valeur, VRS, sur sa borne de sortie 18 et fournit un numéro NUS, désignant l'orientation de l'hypercontour, sur sa borne de sortie 19. Lorsque toutes les valeurs $VR_i$ pour un même point courant sont inférieures à une valeur de seuil fixée, λ, le dispositif 17 fournit des valeurs VRS = 0 et NUS = 0 indiquant qu'il n'y a pas d'hypercontour au point courant.

La figure 16 représente le schéma synoptique d'un exemple de réalisation du dispositif de calcul de convolution 11. Le dispositif de calcul 12 est identique au dispositif de calcul 11. Le dispositif 11 comporte : dix-huit registres 41, ... , 46 ; neuf multiplieurs 47, ... , 49 ; un additionneur 50 à neuf entrées ; et un registre de sortie 51. Les registres 41, ... , 46, et 51 sont commandés respectivement par des signaux de commande CC1, ... , CC19 fournis par dix-neuf sorties du séquenceur 2. Les registres 41, ... , 46 sont associés deux par deux. Par exemple les sorties des registres 41 et 42 sont reliées respectivement à deux entrées du multiplieur 47. Les sorties des registres 43 et 44 sont reliées respectivement à deux entrées du multiplieur 48. Les sorties des registres 45 et 46 sont reliées respectivement à deux entrées du multiplieur 49. Dans chaque paire de registres associés, l'un des registres a une entrée reliée à la borne d'entrée 21 pour recevoir une valeur de luminance fournie par la mémoire 9 et l'autre registre possède une entrée reliée à la borne d'entrée 20 pour recevoir une valeur de coefficient COF1 fournie par le registre à décalage 4.

Sous l'action des signaux de commande successifs : CC1, CC3, ... , CC17, les registres 41, 43, ... , 45 stockent successivement neuf valeurs de luminance. Sous l'action des signaux de commande successifs CC2, CC4, ... , CC18, les registres 42, 44, ... , 46 stockent successivement neuf valeurs de coefficient, COF1, correspondant à un sous-masque de dimensions 3 × 3. Puis les multiplicateurs 47, 48, ... , 49 et l'additionneur 50 déterminent la valeur d'un produit de convolution qui est stocké ensuite dans le registre 51 sous l'action du signal de commande CC19. La sortie du registre 51 est reliée à la borne de sortie 22 du dispositif 11.

La figure 17 représente le schéma synoptique d'une seconde partie de cet exemple de réalisation du dispositif selon l'invention. Cette seconde partie permet de réaliser l'affinage de la détection des hypercontours, le stockage de la valeur du rapport de vraisemblance généralisée, et de la valeur $(\theta_j , \alpha_j)$ de l'orientation de l'hypercontour trouvé en chaque point de l'image courante. La valeur de VRS et de NUS sont prises égales à 0 par convention lorsqu'il n'y a pas d'hypercontour. Cette seconde partie comporte un ensemble de registres 30, un processeur 31 dit processeur d'affinage, un dispositif de calcul d'adresses 32, une mémoire d'hypercontours 33, un contrôleur 34 de bus de données et un circuit 35 de commande de lecture-écriture.

La borne 18 est reliée à une entrée du contrôleur 34. La borne 19 est reliée à une entrée d'adresse de l'ensemble de registres 30. La borne 13 est reliée à une entrée du dispositif 32. Une sortie de l'ensemble de registres 30 est reliée à une entrée du contrôleur de bus 34. Une entrée-sortie du processeur d'affinage 31 est reliée à une entrée-sortie du contrôleur 34. Deux sorties du processeur 31 sont reliées respectivement à deux entrées du dispositif de calcul d'adresses 32 pour lui fournir un signal de commande et une valeur d'adresse ADRA. Deux autres sorties du processeur 31 sont reliées respectivement à une entrée du circuit 35 de commande de lecture et d'écriture, et à une entrée de commande du contrôleur 34. Une sortie du dispositif 32 est reliée à une entrée d'adresse de la mémoire d'hypercontours 33 pour lui fournir une adresse ADRC. Une entrée-sortie de données de la mémoire 33 est reliée à une entrée-sortie du contrôleur 34. Une entrée de commande de lecture-écriture de la mémoire 33 est reliée à une sortie du circuit 35. Une entrée de commande du circuit 36 et une entrée de commande du dispositif 32 sont reliées respectivement à deux sorties du séquenceur 2, par des liaisons non représentées, pour recevoir respectivement des signaux CA6 et CA7.

La mémoire d'hypercontours 33 a une capacité correspondant au nombre de points d'une image. A chaque adresse de cette mémoire est stockée une valeur VRS et une valeur $(\theta_j , \alpha_j)$ s'il existe, au point correspondant, un hypercontour ayant une orientation $(\theta_j , \alpha_j)$. Une valeur VRS = 0 est stockée si au point correspondant il n'y a pas d'hypercontour. La valeur $(\theta_j , \alpha_j)$ à stocker est fournie par l'ensemble de registres 30, en fonction de l'adresse constituée par la valeur NUS. Elle est transmise simultanément avec la valeur VRS à l'entrée de données de la mémoire 33 par le contrôleur de bus de données 34.

Pour l'écriture de VRS et $(\theta_j , \alpha_j)$, le dispositif 32 reçoit le signal de commande CA7 pour fournir une valeur d'adresse ADRC = ADRS permettant de stocker les valeurs VRS et $(\theta_j , \alpha_j)$ dans la mémoire 33. Le circuit 35 reçoit un signal logique CA6 fourni par le séquenceur 2 pour commander l'écriture dans la mémoire 33.

En alternance, avec le stockage des valeurs VRS et $(\theta_j , \alpha_j)$, la mémoire 33 est lue trois fois, sous la commande du processeur 31, pour affiner la détection d'un hypercontour en chaque point, et elle est éventuellement inscrite une fois encore sous la commande du processeur 31 pour stocker la valeur VRS = 0 en conclusion éventuelle de l'affinage. Les ordres de lecture et d'écriture sont alors donnés par le processeur 31 et transmis par le circuit 35. Les adresses de lecture et d'écriture sont alors des adresses ADRC calculées par le dispositif 32 en fonction de la valeur d'adresse ADRA et d'un signal de commande fourni par le processeur 31.

Le processeur 31 comporte essentiellement : un séquenceur, initialisé par un signal de commande CA5 fourni par le séquenceur 2, fournissant les signaux de commande du dispositif 32 et du circuit 35 ; et une unité arithmétique et logique microprogrammée selon l'organigramme représenté sur la figure 18.

L'affinage de la détection d'un hypercontour en un point P a lieu avec un retard constant, correspondant à la durée d'une ligne d'image, après le traitement ayant déterminé la valeur $(\theta_j(P), \alpha_j(P))$ de l'orientation de l'hypercontour et la valeur VRS(P) du rapport de vraisemblance généralisée au point P. L'affinage commence par une détermination de l'adresse ADRA(P), de la mémoire 33, contenant les valeurs $(\theta_j(P), \alpha_j(P))$ et VRS(P). Cette adresse est calculée par le processeur 31 en tenant compte du retard correspondant à une ligne. Puis le processeur 31 commande une lecture à l'adresse ADRA(P) en fournissant un signal de commande au dispositif 32 pour qu'il transmette cette adresse à la mémoire 33 et en fournissant un signal de commande de lecture au circuit 35. Les valeurs lues VRS(P) et $(\theta_j(P), \alpha_j(P))$, sont ensuite stockées dans un registre du processeur 31.

La valeur VRS(P) est comparée à la valeur zéro. Si elle est égale à zéro, il n'y a pas d'hypercontour, donc aucun affinage n'est à réaliser, le processeur 31 peut passer à l'affinage de l'hypercontour au point suivant, qui est représenté dans l'organigramme par P+1. Si elle n'est pas égale à zéro, il y a un hypercontour à affiner, le processeur 31 détermine les coordonnées de deux points, PV1 $(\theta_j(P), \alpha_j(P))$ et PV2 $(\theta_j(P) \alpha_j(P))$ voisins du point P sur la normale à l'hypercontour, en additionnant aux coordonnées du point P deux incréments lus dans une table en fonction de $(\theta_j(P), \alpha_j(P))$. Puis il détermine des adresses, ADRA(PV1) et ADRA(PV2), correspondant à ces deux points voisins en déterminant le rang de ces points dans l'image à partir de leurs coordonnées.

Le processeur 31 commande ensuite une lecture à ces adresses pour obtenir des valeurs VRS(PV1) et VRS(PV2) du rapport de vraisemblance généralisée pour ces deux points voisins, puis il les compare à la valeur VRS(P) du rapport de vraisemblance généralisée au point considéré. Si VRS(P) est supérieur à VRS(PV1) et à VRS(PV2), l'hypercontour détecté au point P est exact, le processeur peut passer à l'affinage de l'hypercontour au point suivant P+1. Sinon l'hypercontour détecté en P est rejeté, et le processeur 31 remet à zéro la valeur VRS(P) en inscrivant des zéros à l'adresse ADRA(P), adresse qu'il a gardé dans un registre interne. Puis il passe au traitement du point suivant P+1.

La programmation de cet organigramme pour sa mise en oeuvre au moyen d'une unité logique et arithmétique est à la portée de l'homme de l'art.

Cet exemple de réalisation d'un dispositif pour la mise en oeuvre du procédé selon l'invention ne limite pas la portée de l'invention. L'homme de l'art est capable d'adapter cet exemple de réalisation en fonction du type d'images à traiter, notamment en fonction de l'intervalle de temps disponible pour traiter chaque image. Par exemple, une suite d'images constituées chacune de deux trames entrelacées, peut être traitée en considérant chaque trame comme une image indépendante ; les mémoires 9, 10, et 33 ont alors une capacité correspondant à une trame.

Cet exemple de réalisation peut, sans modification, être appliqué au traitement d'une suite d'images représentant une suite de coupes d'un même objet, l'espace considéré étant alors un espace à trois dimensions spatiales.

Cet exemple peut être facilement adapté par l'homme de l'art pour permettre de prendre en compte trois images successives. Il comporte dans ce cas : trois mémoires d'images, trois aiguillages, trois dispositifs de calcul d'adresses et trois dispositifs de calcul de convolution. Il peut être adapté similairement pour prendre en compte un nombre encore plus élevé d'images.

L'invention est applicable à divers traitement d'images, notamment à la reconnaissance de formes dans le domaine de la robotique, à l'imagerie médicale, à l'imagerie militaire.

## Revendications

1. Procédé de détection de contours en imagerie, et d'estimation locale de leurs paramètres, dans un espace à au moins trois dimensions, ces contours étant appelés hypercontours et cet espace représentant au moins une suite de j images à deux dimensions avec j = 0 à m, où m est au moins égal à 1, chaque point d'image étant représenté par la valeur numérique de sa luminance, caractérisé en ce que tout hypercontour est modélisé localement par une portion d'une hypersurface $H_i$ dont les paramètres peuvent prendre un nombre s de jeux de valeurs prédéterminées: $R_i$ pour i = 1 à s; et en ce qu'il consiste, successivement pour chaque point d'une image, dit point courant de l'image courante, à traiter les étapes suivantes dans un système de traitement d'information numérique:

– calculer des produits de convolution $L_j * G_{ij}$, pour i =1 à s, et pour j = 0 à m, où m est au moins égal à 1, où $L_o$ est une matrice bi-dimensionnelle formée par des valeurs de luminance des points de l'image courante au voisinage du point courant; où $L_j$ est une matrice bi-dimensionnelle formée par des valeurs de luminance d'une image, dite $j^{ème}$ image voisine, qui précède ou qui suit l'image courante dans l'une des suites d'images; où $G_{io}$ est une matrice bi-dimensionnelle prédé-terminée telle que $|L_o * G_{io}|$ est maximale lorsque la matrice $L_o$ correspond à une portion de l'image courante représentant un segment de contour passant par le point courant et pouvant être considéré comme l'intersection du plan de l'image courante avec une hypersurface $H_i$ passant par le point courant et ayant le jeu $R_i$ pour valeurs de paramètres; et où $G_{ij}$ est une matrice bi-dimensionnelle telle que $|L_j * G_{ij}|$ est maximale lorsque la matrice $L_j$ correspond à une portion de la $j^{ème}$ image voisine, représentant un segment de contour pouvant être considéré comme l'intersection du plan de cette $j^{ème}$ image voisine avec l'hypersurface $H_i$;
– calculer les valeurs $VR_i$ d'une fonction dite rapport de vraisemblance généralisée:

$$VR_i = \left| \sum_{j=0 \text{ à } m} L_j * G_{ij} \right|$$

pour $i = 1$ à $s$;
– déterminer parmi les valeurs $VR_i$ pour $i = 1$ à $s$ la valeur VRS qui est maximale;
– comparer la valeur VRS par rapport à une valeur fixée $\lambda$;
– conclure qu'il y a un hypercontour passant par le point courant et modélisable localement par une portion d'hypersurface ayant un jeu de valeurs de paramètres correspondant à VRS si VRS est supérieure à $\lambda$ et si pour $j = 0$ à $m$ toutes les valeurs

$$\left| \frac{L_o * G_{io}}{L_j * G_{ij}} \right|$$

sont comprises entre deux valeurs de seuils $\mu 1$ et $\mu 2$ choisies en fonction de la nature des images; sinon conclure qu'il n'y a pas d'hypercontour passant par le point courant.

2. Procédé selon la revendication 1, caractérisé en ce que chaque hypersurface $H_i$ est un plan $PL_i$; ce plan étant défini par un couple de valeurs de paramètres $R_i = (\theta_i, \alpha_i)$.

3. Procédé selon la revendication 1, dans lequel chaque point d'image est considéré comme le centre d'une maille d'une structure d'échantillonnage de l'image, caractérisé en ce que chaque matrice $G_{ij}$ com-porte deux parties, une première partie ayant des coefficients de la forme

$$h.A. \sqrt{\frac{n_2}{n.n_1}}$$

correspondant aux mailles situées d'un premier côté par rapport à l'hypercontour, une seconde partie ayant des coefficients de la forme

$$- h.A. \sqrt{\frac{n_1}{n.n_2}}$$

correspondant aux mailles situées d'un second côté par rapport à l'hypercontour; où A est une constante identique pour toutes les matrices $G_{ij}$ pour $i = 1$ à $s$ et $j = 0$ à $m$; où $n_1$ est le nombre des mailles dont la plus grande partie est située du premier côté par rapport à l'hypersurface $H_i$; où $n_2$ est le nombre des mailles dont la plus grande partie est située du second côté par rapport à l'hypersurface $H_i$; où $n = n_1 + n_2$; où h est égal à 1 pour toute maille qui n'est pas coupée par l'hypercontour; et où

$$h = \left| \frac{a-b}{a+b} \right|$$

pour toute maille coupée par l'hypersurface $H_i$, a étant l'aire de la partie de cette maille située du premier côté par rapport à l'hypersurface $H_i$ et b étant l'aire de la partie de cette maille située du second côté.

4. Procédé selon la revendication 1, appliqué à une séquence d'images, représentant une même scène à des instants successifs, caractérisé en ce que les hypercontours sont détectés et leurs paramètres sont estimés dans un repère à deux dimensions spatiales et une dimension temporelle (x, y, t), ces paramètres fournissant une estimation du mouvement de chaque segment de contour contenu dans la séquence d'images, dans la direction perpendiculaire à ce segment.

5. Procédé selon la revendication 1, appliqué à une suite d'images représentant une série de coupes d'un même objet, à un même instant, caractérisé en ce que les hypercontours sont détectés et, leurs paramètres sont estimés, dans un repère à trois dimensions spatiales (x, y, z).

6. Procédé selon la revendication 1, appliqué à plusieurs suites d'images d'un même objet, chaque suite correspondant à un instant différent et étant constituée d'une série de coupes de l'objet, caractérisé en ce que les hypercontours sont détectés et leurs paramètres sont estimés dans un repère à trois dimensions spatiales et une dimension temporelle (x, y, z, t).

7. Procédé selon la revendication 1 appliqué à une suite d'images constituée d'un couple d'images de télévision stéréoscopique, caractérisé en ce que l'image courante et la première image voisine sont constituées par ce couple, et en ce que les hypercontours sont détectés et leurs paramètres estimés dans un repère à trois dimensions spatiales (x, y, z).

8. Procédé selon l'une des revendications 1 à 7, caractérisé en ce que pour affiner la détection des hypercontours il consiste en outre, pour chaque point P où un hypercontour, a été détecté, à:
– comparer la valeur maximale VRS(P) du rapport de vraisemblance généralisée pour le point P, avec les valeurs maximales VRS(PV1) et VRS(PV2) de même rapport de vraisemblance généralisée en un premier et un second point PV1 et PV2, voisins du point P considéré, et situés de part et d'autre de celui-ci sur une perpendiculaire à l'hypercontour;
– conclure qu'il y a un hypercontour, modélisable par une portion de l'hypersurface ayant un jeu de valeurs de paramètres correspondant à VRS et passant par le point P, si:
VRS(P),≥ VRS(PV1) et VRS(P)≥ VRS(PV2),
– ou conclure qu'il n'y a pas de l'hypercontour passant par le point P, si:
VRS(P)< VRS(PV1) ou VRS(P) < (PV2).

9. Dispositif pour détecter des contours appelés hypercontours et estimer localement leurs paramètres dans un espace à trois dimensions, l'espace considéré représentant une suite de j images à deux dimensions, avec j=0 à m, où m est au moins égal à 1, chaque point étant représenté par la valeur numérique de sa luminance, caractérisé en ce que tout hypercontour est modélisé localement par une portion d'une hypersurface Hi, dont les paramètres peuvent prendre un nombre de jeux de valeurs Ri pour i=1 à s et en ce que le dispositif comporte:
– des moyens (3, 9, 10) pour numériser et stocker les valeurs de luminance des points de m+1 images de la suite, l'une de ces images étant dite image courante;
– des mémoires (4) pour stocker les coefficients de matrices bidimensionnelles prédéterminées, $G_{ij}$ pour i = 1 à s et j = 0 à m, correspondant aux jeux $R_i$ de valeurs de paramètres;
– des moyens (5, 11) pour calculer, successivement pour chaque point de l'image courante, des produits de convolutions, $L_j * G_{ij}$ pour i = 1 à s et j = 0 à m, où $L_j$ est une matrice formée de valeurs de luminance stockées par les moyens (3, 9, 10) pour mémoriser et stocker, et où $G_{ij}$ est une matrice bi-dimensionnelle telle que $|L_j * G_{ij}|$ est maximale, lorsque la matrice $L_j$ correspond à une portion de la $j^{ème}$ image, représentant un segment de contour pouvant être considéré comme l'intersection du plan de cette $j^{ème}$ image avec l'hypersurface Hi;
– des moyens (15, 16) pour calculer, pour chaque point de l'image courante, des valeurs:

$$VR_i = \left| \sum_{j=0 \text{ à } m} G_{ij} * L_j \right| \text{ pour } i = 1 \text{ à } s ;$$

pour déterminer parmi les valeurs $VR_i$ pour i = 1 à s, la valeur VRS qui est maximale; et pour comparer VRS à une valeur de seuil fixée œ;
– des moyens (14) pour comparer les valeurs

$$\left| \frac{L_o * G_{io}}{L_j * G_{ij}} \right|$$

pour j = 1 à m, par rapport à deux valeurs de seuil prédéterminées μ1 et μ2;
– des moyens (17) pour conclure qu'il existe un hypercontour modélisable localement par une hypersurface dont le jeu de valeurs de paramètres correspond à la valeur VRS et passant par le point courant si VRS est ,supérieure à œ, et si pour j = 0 à m toutes les valeurs

$$\left| \frac{L_o * G_{io}}{L_j * G_{ij}} \right|$$

sont comprises entre $\mu 1$ et $\mu 2$; et sinon, pour conclure qu'il n'y a pas d'hypercontour passant par le point courant;
- une mémoire (33) pour stocker, pour chaque point de l'image courante, la valeur VRS et le jeu de valeurs de paramètres d'un hypercontour passant par ce point, s'il existe un tel hypercontour.

10. Dispositif selon la revendication 9, pour la mise en oeuvre du procédé selon la revendication 8, caractérisé en ce qu'il comporte en outre:
- une mémoire (33) pour stocker la valeur maximale VRS du rapport de vraisemblance généralisée et la valeur correspondante des paramètres d'une hypersurface, pour chaque point de l'image courante;
- des moyens (31, 32, 34, 35) pour lire dans cette mémoire (33), successivement pour chaque point P de l'image courante, la valeur maximale VRS(P) du rapport de vraisemblance généralisée pour le point P considéré, et les valeurs maximales VRS(PV1) et VRS(PV2) du rapport de vraisemblance généralisée de deux points voisins du point P considéré et situés sur la normale à l'hypercontour, de part et d'autre du point P considéré;
- des moyens (31) pour comparer VRS(P) avec VRS(PV1) et avec VRS(PV2), pour chaque point P de l'image courante, et conclure:
- qu'il y a au point P un hypercontour modélisable localement par une hypersurface ayant un jeu de valeurs leurs de paramètres correspondant à VRS, si :
VRS(P)≥VRS(PV1) et
VRS(P)≥VRS(PV2) ;
- qu'il n'y a pas d'hypercontour passant par le point P considéré, si
VRS(P) < VRS(PV1) ou
VRS(P) < VRS(PV2).

## Patentansprüche

1. Verfahren zur Erfassung von Konturen in der Abbildungstechnik und zur örtlichen Abschätzung ihrer Parameter in einem wenigstens dreidimensionalen Raum, wobei diese Konturen als Hyperkonturen bezeichnet werden und dieser Raum, der wenigstens eine Folge von j zweidimensionalen Bildern darstellt, mit j=0 bis m, worin m wenigstens 1 entspricht, und jeder Bildpunkt durch den digitalen Wert seiner Luminanz dargestellt wird, dadurch gekennzeichnet, daß jede Hyperkontur durch einen Teil einer Hyperfläche $H_i$ örtlich modelliert wird, deren Parameter eine Anzahl s von Sätzen vorbestimmter Werte annehmen können: $R_i$ für i = 1 bis s; und daß es darin besteht, nacheinander für jeden Punkt eines Bildes, der als laufender Punkt des laufenden Bildes bezeichnet wird, die folgenden Schritte in einem System zur digitalen Informationsverarbeitung auszuführen:
- die Faltungsprodukte $L_j * G_{ij}$ für i = 1 bis s und für j = 0 bis m, worin m wenigstens 1 entspricht, zu berechnen, worin $L_o$ eine zweidimensionale Matrix ist, die durch Werte der Luminanz der Punkte des laufenden Bildes in der Nähe des laufenden Punktes gebildet ist; worin $L_j$ eine zweidimensionale Matrix ist, die durch die Werte der Luminanz eines Bildes gebildet ist, das als j-tes benachbartes Bild bezeichnet wird, das in einer der Bilderfolgen dem laufenden Bild vorausgeht oder folgt; worin $G_{io}$ eine vorbestimmte zweidimensionale Matrix ist, so daß $|L_o * G_{io}|$ maximal ist, wenn die Matrix $L_o$ einem Teil des laufenden Bildes entspricht, der ein Segment einer Kontur darstellt, das den laufenden Punkt durchquert und als Schnittpunkt der Ebene des laufenden Bildes mit einer Hyperfläche $H_i$ betrachtet werden kann, die den laufenden Punkt durchquert und den Satz $R_i$ als Parameter-Werte aufweist; und worin $G_{ij}$ eine zweidimensionale Matrix ist, so daß $|L_j * G_{ij}|$ maximal ist, wenn die Matrix $L_j$ einem Teil des j-ten benachbarten Bildes enstpricht, das ein Segment einer Kontur darstellt, das als der Schnittpunkt der Ebene dieses j-ten benachbarten Bildes mit der Hyperfläche $H_i$ betrachtet werden kann;
- die Werte $VR_i$ einer Funktion, die als Verhältnis der verallgemeinerten Wahrscheinlichkeit bezeichnet wird, zu berechnen:

$$VR_i = \left| \sum_{\substack{j = 0 \text{ bis } m}} L_j * G_{ij} \right| \text{ für i = 1 bis s;}$$

- unter den Werten $VR_i$ für i = 1 bis s den Wert VRS, der maximal ist, zu bestimmen;
- den Wert VRS mit einem bestimmten Wert $\lambda$ zu vergleichen;

17

— Folgern, daß es eine den laufenden Punkt durchquerende Hyperkontur gibt, welche durch einen Teil einer Hyperfläche örtlich modelliert werden kann, die einen Satz von Parameter-Werten aufweist, die VRS entsprechen, wenn VRS größer als $\lambda$ ist und wenn für j = 0 bis m alle Werte

$$\left| \frac{L_o * G_{io}}{L_j * G_{ij}} \right|$$

zwischen zwei Schwellwerten $\mu_1$ und $\mu_2$ enthalten sind, die in Abhängigkeit von dem Wesen der Bilder gewählt sind; Andernfalls folgern, daß es keine den laufenden Punkt durchquerende Hyperkontur gibt.

2. Verfahren nach Anspruch 1, dadurch gekennzeichnet, daß jede Hyperfläche $H_i$ eine Ebene $PL_i$ ist; wobei diese Ebene durch ein Paar von Parameter-Werten $R_i = (\theta_i, \alpha_i)$ definiert wird.

3. Verfahren nach Anspruch 1, in welchem jeder Punkt des Bildes als Zentrum einer Masche einer Abtast-Struktur des Bildes betrachtet ist, dadurch gekennzeichnet, daß jede Matrix $G_{ij}$ zwei Teile umfaßt, einen ersten Teil mit Koeffizienten der Form

$$h.A.\sqrt{\frac{n_2}{n.n_1}},$$

die den Maschen entsprechen, welche sich auf einer ersten Seite in bezug auf die Hyperkontur befinden, sowie einen zweiten Teil, der Koeffizienten der Form

$$-h.A.\sqrt{\frac{n_1}{n.n_2}}$$

aufweist, die den Maschen entsprechen, die sich auf einer zweiten Seite in bezug auf die Hyperkontur befinden; worin A eine identische Konstante für alle Matrizen $G_{ij}$ für i = 1 bis s und j = 0 bis m ist; worin $n_1$ die Anzahl der Maschen ist, deren größter Teil sich auf der ersten Seite in bezug auf die Hyperfläche $H_i$ befindet; worin $n_2$ die Anzahl der Maschen ist, deren größter Teil sich auf der zweiten Seite in bezug auf die Hyperfläche Hi befindet; worin $n = n_1 + n_2$; h gleich 1 ist für jede Masche, die nicht von der Hyperkontur geschnitten wird, und worin

$$h = \left| \frac{a-b}{a+b} \right|$$

für jede Masche, die von der Hyperfläche $H_i$ geschnitten wird, wobei $\underline{a}$ die Fläche des Teils dieser Masche ist, die sich auf der ersten Seite in bezug auf die Hyperfläche $H_i$ befindet, und $\underline{b}$ die Fläche des Teils dieser Masche ist, der auf der zweiten Seite liegt.

4. Verfahren nach Anspruch 1, das auf eine Folge von Bildern angewandt wird, die eine selbe Szene zu aufeinanderfolgenden Zeitpunkten darstellt, dadurch gekennzeichnet, daß in einem Koordinatensystem mit zwei Raumdimensionen und mit einer Zeitdimension (x, y, t) die Hyperkonturen erfasst und deren Parameter abgeschätzt werden, wobei diese Parameter eine Abschätzung der Bewegung jedes Kontur-Segmentes, das in der Bilder-Folge enthalten ist, in der zu diesem Segment senkrechten Richtung liefern.

5. Verfahren nach Anspruch 1, das auf eine Bilderfolge angewandt ist, die eine Reihe von Schnitten eines selben Gegenstandes zu einem selben Zeitpunkt darstellen, dadurch gekennzeichnet, daß in einem Koordinatensystem mit drei Raumdimensionen (x, y, z) die Hyperkonturen erfaßt und deren Parameter abgeschätzt werden.

6. Verfahren nach Anspruch 1, das auf mehrere Bilderfolgen eines selben Gegenstandes angewandt wird, wobei jede Folge einem verschiedenen Zeitpunkt entspricht und aus einer Reihe von Schnitten des Gegenstandes besteht, dadurch gekennzeichnet, daß in einem Koordinatensystem mit drei Raumdimensionen und einer Zeitdimension (x, y, z, t) die Hyperkonturen erfaßt und deren Parameter abgeschätzt werden.

7. Verfahren nach Anspruch 1, das auf eine Bilderfolge angewandt wird, die aus einem Bilderpaar für stereoskopisches Fernsehen besteht, dadurch gekennzeichnet, daß das laufende Bild sowie das erste benachbarte Bild aus diesem Paar bestehen und daß in einem Koordinatensystem mit drei Raumdimensionen (x, y, z) die Hyperkonturen erfaßt sowie ihre Parameter abgeschätzt werden.

8. Verfahren nach einem der Ansprüche 1 bis 7, dadurch gekennzeichnet, daß zur Verfeinerung der Konturen es ferner für jeden Punkt P, in welchem eine Hyperkontur erfaßt worden ist, darin besteht:
– den Maximalwert VRS(P) des Verhältnisses der verallgemeinerten Wahrscheinlichkeit für den Punkt P mit den Maximalwerten VRS(PV1) und VRS(PV2) des selben Verhältnisses der verallgemeinerten Wahrscheinlichkeit in einem ersten Punkt PV1 sowie in einem zweiten Punkt PV2 zu vergleichen, die dem betrachteten Punkt P benachbart sind und auf einer Senkrechten zu der Hyperkontur beiderseits dieses Punktes gelegen sind;
– zu folgern, dass es eine Hyperkontur gibt, die durch einen Teil der Hyperfläche modellierbar ist, welche einen Satz von Parametern aufweist, die VRS entsprechen und den Punkt P durchqueren, wenn:
VRS(P) $\geq$ VRS(PV1) und VRS(P) $\geq$ VRS(PV2)
– oder folgern, daß es keine Hyperkontur gibt, die den Punkt P durchquert, wenn:
VRS(P) < VRS(PV1) oder VRS(P) < VRS(PV2)

9. Vorrichtung zur Erfassung der als Hyperkonturen bezeichneten Konturen und zur örtlichen Abschätzung ihrer Parameter in einem dreidimensionalen Raum, wobei der betrachtete Raum eine Folge von j zweidimensionalen Bildern mit j=0 bis m, worin m mindestens gleich 1 ist, darstellt, und jeder Punkt durch den digitalen Wert seiner Luminanz dargestellt ist, dadurch gekennzeichnet, daß jede Hyperkontur durch einen Teil einer Hyperfläche Hi örtlich modelliert wird, deren Parameter eine Anzahl von Sätzen mit Werten Ri für i=1 bis s annehmen können, und daß die Vorrichtung umfasst:
– Mittel (3, 9, 10) zum Numerieren sowie Speichern der Luminanz-Werte der Punkte der m+1 Bilder der Folge, wobei eines dieser Bilder als laufendes Bild bezeichnet wird;
–Speicher (4) zum Speichern der vorbestimmten zweidimensionalen Matrizen $G_{ij}$ für i = 1 bis s und j = 0 bis m, welche den Sätzen $R_i$ von Werten der Parameter entsprechen;
– Mittel (5, 11) zum Berechnen der Faltungsprodukte Lj * $G_{ij}$ für i = 1 bis s und j = 0 bis m, nacheinander für jeden Punkt des laufenden Bildes, worin $L_j$ eine Matrix ist, die durch die von den Mitteln (3, 9, 10) zum Speichern gespeicherten Luminanzwerte gebildet ist, und worin $G_{ij}$ eine zweidimensionale Matrix ist, so dass |$L_j$ * $G_{ij}$| maximal ist, wenn die Matrix einem Teil des j-ten Bildes ist, das ein Segment einer Kontur darstellt, das als Schnittpunkt der Ebene dieses j-ten Bildes mit der Hyperfläche Hi betrachtet werden kann;
– Mittel (5, 11) zum Berechnen, nacheinander und für jeden Punkt des laufenden Bildes, der Faltungsprodukte $L_j$ * $G_{ij}$ für i = 1 bis s und j = 0 bis m, worin $L_j$ eine Matrix ist, welche durch die von den Mitteln (3, 9, 10) zum Speichern gespeicherten Luminanzwerte gebildet ist, und worin $G_{ij}$ eine zweidimensionale Matrix ist, so daß |$L_j$ * $G_{ij}$| maximal ist, wenn die Matrix $L_j$ einem Teil des j-ten Bildes entspricht, das ein Segment einer Kontur darstellt, das als Schnittpunkt der Ebene dieses j-ten Bildes mit der Hyperfläche Hi betrachtet werden kann;
– Mittel (15, 16) zum Berechnen der folgenden Werte für jeden Punkt des laufenden Bildes:

$$VR_i = \left| \sum_{j=0 \text{ bis } m} G_{ij} * L_j \right| \quad \text{für } i = 1 \text{ bis } s;$$

um den Wert VRS, der maximal ist, unter den Werten $VR_i$ für i = 1 bis s zu bestimmen; und um VRS mit einem bestimmten Schwellwert oe zu vergleichen;
– Mittel (14) zum Vergleichen der Werte

$$\left| \frac{L_o * G_{io}}{L_j * G_{ij}} \right|$$

für j = 1 bis m mit zwei vorbestimmten Schwellwerten $\mu1$ und $\mu2$;
– Mittel (17) zum Folgern, daß es eine Hyperkontur gibt, die durch eine Hyperfläche örtlich modellierbar ist, deren Satz von Parameterwerten dem Wert VRS entspricht und den laufenden Punkt durchquert, wenn VRS grösser als oe ist, und wenn für j = 0 bis m alle Werte

$$\left| \frac{L_o * G_{io}}{L_j * G_{ij}} \right|$$

zwischen $\mu1$ und $\mu2$ enthalten sind; und andernfalls zu folgern, dass es keine Hyperkontur gibt, die den laufenden Punkt durchquert;
– einen Speicher (33), um für jeden Punkt des laufenden Bildes, den Wert VRS sowie den Satz der Parameterwerte einer diesen Punkt durchquerenden Hyperkontur zu speichern, falls es eine solche Hyperkontur gibt.

10. Vorrichtung nach Anspruch 9 für die Durchführung des Verfahrens nach Anspruch 8, dadurch gekennzeichnet, daß sie ferner umfaßt:

– einen Speicher (33) zum Speichern des Maximalwertes VRS des Verhältnisses der verallgemeinerten Wahrscheinlichkeit sowie des entsprechenden Wertes der Parameter einer Hyperfläche für jeden Punkt des laufenden Bildes;

– Mittel (31, 32, 34, 35), um aus diesem Speicher (33) nacheinander für jeden Punkt P des laufenden Bildes den Maximalwert VRS(P) des Verhältnisses der verallgemeinerten Wahrscheinlichkeit für den betrachteten Punkt P und die Maximalwerte VRS(PV1) und VRS(PV2) des Verhältnisses der verallgemeinerten Wahrscheinlichkeit zweier, dem betrachteten Punkt P benachbarten Punkte, die beiderseits des betrachteten Punktes auf der Senkrechten der Hyperkontur gelegen sind, auszulesen;

– Mittel (31) zum Vergleichen von VRS(P) mit VRS(PV1) und mit VRS(PV2) für jeden Punkt P des laufenden Bildes und zum Folgern:

– daß es am Punkt P eine Hyperkontur gibt, die durch eine Hyperfläche örtlich modellierbar ist, welche einen Satz von Parameterwerten aufweist, die VRS entsprechen, wenn:

VRS(P) ≥ VRS (PV1) und VRS(P) ≥ VRS(PV2);

– daß es keine Hyperkontur gibt, die den betrachteten Punkt P durchquert, wenn:

VRS(P) < VRS(PV1) oder VRS(P) < VRS(PV2).

## Claims

1. A computing device for detecting contourg in an imaging method and for the local estimation of their parameters, in a space having at least three dimensions, said contours being termed hypercontours and said space representing at least one sequence of j images with two dimensions with j = 0 to m, wherein m is at least equal to 1, each image dot being represented by the digital value of its luminance, characterized in that every hypercontour is locally configured by a portion of a hypersurface $H_i$ whose parameters may represent a number s of sets of predetermined values: $R_i$ for i = 1 to s; and in that it consists in processing, successively for each dot of an image, termed the current dot of the current image, the following stages in a digital information processing system:

– computing the products of convolution $L_j * G_{ij}$, for i = 1 to s, and for j = 0 to m, wherein m is at least equal to 1, wherein $L_o$ is a bidimensional matrix formed by the luminance values of the dots of the current image in the neighborhood of the current dot; wherein $L_j$ is a bidimensional matrix formed by luminance values of an image, termed the jth adjacent image, which precedes or which follows the current image in one of the series of images; wherein $G_{io}$ is a predetermined bidimensional matrix such that $|L * G_{io}|$ is at a maximum when the matrix $L_o$ corresponds to a portion of the current image representing a contour segment passing through the current dot and capable of being considered as the intersection of the plane of the current image with a hypersurface $H_i$ passing through the current dot and having the set $R_i$ for parameter values; and wherein $G_{ij}$ is a bidimensional matrix such that $|L_j * G_{ij}|$ is at a maximum when the matrix $L_j$ corresponds to a portion of the jth neighboring image, representing a contour segment capable of being considered as the intersection of the plane of this jth neighboring image with the hypersurface $H_i$;

– computing the values $VR_i$ of a function termed the generalized truth relation such that:

$$VR_i = \left| \sum_{\substack{j=0 \\ to\ m}} L_j * G_{ij} \right| \text{ for } i = 1 \text{ to } s;$$

– ascertaining among the values $VR_i$ for i = 1 to s the value VRS which is at the maximum;

– comparing the value VRS with a fixed value $\lambda$;

– concluding that there is a hypercontour running through the current dot and capable of being locally configured by a portion of hypersurface having a set of parameter values corresponding to VRS if VRS is greater than $\lambda$ and if for j = 0 to m all the values of

$$\left| \frac{L_o * G_{io}}{L_j * G_{ij}} \right|$$

are comprised between two threshold values $\mu_1$ and $\mu_2$ selected as a function of the nature of the images; and, if this is not the case, concluding that there is no hypercontour passing through the current dot.

2. The method as claimed in claim 1, characterized in that each hypersurface $H_i$ is a plane $PL_i$; said plane being defined by a pair of parameter values $R_i = (\theta_i, \alpha_i)$.

3. The method as claimed in claim 1, wherein each image dot is considered as the center of an element of an image sampling structure, characterized in that each matrix $G_{ij}$ comprises two parts, a first part having coefficients of the form

$$h \cdot A \cdot \sqrt{(n_2)/(n \cdot n_1)}$$

corresponding to the elements situated on a first side in relation to the hypercontour, a second part having coefficients of the form

$$-h \cdot A \cdot \sqrt{(n_1)/(n \cdot n_2)}$$

corresponding to the elements situated on a second side in relation to the hypercontour; wherein A is a constant identical for all the matrices $G_{ij}$ for i = 1 to s and j = 0 to m; wherein $n_1$ is the number of elements of which the greater part is situated on the first side in relation to the hypersurface $H_i$; wherein $n_2$ is the number of elements of which the greater part is situated on the second side in relation to the hypersurface $H_i$; wherein $n = n_1 + n_2$; wherein h is equal to 1 for every element which is not intersected by the hypercontour; and wherein h is equal to

$$\left| \frac{a - b}{a + b} \right|$$

for each element intersected by the hypersurface $H_i$, a being the area of the part of this element situated on the first side in relation to the hypersurface $H_i$ and b being the area of the part of this element situated on the second side.

4. The method as claimed in claim 1, as applied to a sequence of images, representing a single scene at successive instants, characterized in that the hypercontours are detected and their parameters are estimated in a coordinate system having two spatial dimensions and one time dimension (x, y and t), said parameters furnishing an estimate of the motion of each segment of the contour contained in the sequence of images in the direction perpendicular to this segment.

5. The method as claimed in claim 1, as applied to a series of images representing a series of sections of a single object, at the same instant, characterized in that the hypercontours are detected, and their parameters are estimated, in a coordinate system uith three spatial dimensions (x, y and z).

6. The method as claimed in claim 1, as applied to several series of images of a single object, each series corresponding to a different instant and being made up of a series of sections of the object, characterized in that the hypercontours are detected and their parameters are estimated in a coordinate system with three spatial dimensions and one time dimension (x, y, z and t).

7. The method as claimed in claim 1, as applied to a series of images constituted by a pair of stereoscopic television images, characterized in that the current image and the first adjacent image are constituted by this pair and in that the hypercontours are detected and their parameters are estimated in a coordinate system with three spatial dimensions (x, y and z).

8. The method as claimed in any one of the preceding claims 1 through 7, characterized in that in order to enhance the detection of the hypercontours it furthermore consists – for each dot P where a hypercontour has been detected – in
– comparing the maximum value VRS(P) for the generalized truth relation for the dot P, with the maximum values VRS(PV1) and VRS(PV2) with the same generalized truth relation at a first and at a second dot PV1 and PV2, near the dot P being considered, and situated on the two sides of a line perpendicular to the hypercontour;
– concluding that there is a hypercontour, able to be configured by a portion of the hypersurface having a set of parameter values corresponding to VRS and passing through the dot P, if:
VRS(P) ≥ VRS(PV1) and VRS(P) ≥ VRS(PV2),
or concluding that there is no hypercontour passing through the dot P, if:
VRS(P) < VRS or VRS(P) < VRS(PV2).

9. A device for detecting contours termed hypercontours and for locally estimating their parameters in a space with three dimensions, said space being considered representing a series of j images with two dimensions with j = 0 to m, wherein m is at least equal to 1, each dot being represented by the digital value of its luminance, characterized in that every hypercontour is locally configured by a portion of a hypersurface $H_i$, whose parameters may assume a set number of the values $R_i$ for i = 1 to s and in that the device comprises:
– means (3, 9 and 10) in order to digitalize and store the luminance values of the dots of m + 1 images of the series, one of these images being termed the current image;
– memories (4) in order to store the coefficients of the bidimensional predetermined matrices, $G_{ij}$ for i = 1 to s and j = 0 to m, corresponding to the sets $R_i$ of parameter values;

– means (5 and 11) in order to compute – successively for each dot of the current image – products of convolution, $L_j * G_{ij}$ for i= 1 to s, and j = 0 to m, wherein $L_j$ is a matrix formed with luminance values stored by the means (3, 9 and 10) in order to store same, and wherein $G_{ij}$ is a bidimensional matrix such that $|L_j * G_{ij}|$ is at a maximum when the matrix $L_j$ corresponds to a portion of the jth image, representing a contour segment able to be considered as the intersection of the plane of this jth image with the hypersurface $H_i$;

– means (15 and 16) in order to compute, for each dot of the current image, values:

$$VR_j = \left| \sum_{j=0\ to\ m} G_{ij} * L_j \right| \text{ for i= 1 to s;}$$

in order to ascertain among the values $VR_i$, for i = 1 to s, the value VRS which is at a maximum; and to compare VRS with a fixed threshold value oe;

– means (14) to compare the values

$$\left| \frac{L_o * G_{io}}{L_j * G_{ij}} \right|$$

for j = 1 to m in relation to two predetermined threshold values μ1, μ2;

– means (17) in order to conclude that a hypercontour exists which may be locally configured by a hypersurface whose set of parameter values corresponds to the VRS value and passing through the current dot if VRS is greater than oe, and if for j= 0 to m all the values

$$\left| \frac{L_o * G_{io}}{L_j * G_{ij}} \right|$$

are comprised between μ1 and μ2; and if this is not the case, to conclude that there is no hypercontour passing through the current dot;

– a memory (33) to store, for each dot of the current image, the value VRS and the set of parameter values of a hypercontour passing through this point if there is such a hypercontour.

10. The device as claimed in claim 9, for performing the process as claimed in claim 8, characterized in that it furthermore comprises:

– a memory (33) in order to gtore the maximum value VRS of the generalized truth relation and the value corresponding of the parameters of a hypersurface, for each dot of the current image;

– means ( 31, 32, 34 and 35) in order to read into this memory (33) – successively for each dot P of the current image – the maximum value VRS(P) of the generalized truth relation for the dot P considered, and the maximum values VRS(PV1) and VRS(PV2) of the generalized truth relation of two dots adjacent to the dot P considered and situated on a line normal to the hypercontour, on both sides of the dot P being considered:

– means (31) in order to compare VRS(P) with VRS(PV1) and with VRS(PV2), for each dot P of the current image, and to conclude:

– that at the dot P there is a hypercontour capable of being locally configured by a hypersurface having a set of parameter values corresponding to VRS, if:

VRS(P) ≥ VRS(PV1) and

   VRS(P) ≥ VRS(PV2);

– that there is no hypercontour passing through the dot P being considered, if

VRS(P) < VRS(PV1) or

VRS(P) < VRS(PV2).

Fig.1

Fig.2

Fig.3

Fig.9

Fig.4

Fig.10

Fig.5

Fig.11

**Fig.6** — $\theta = 90°$

| | | | | |
|---|---|---|---|---|
| × | × | × | × | × |
| × | × | × | × | × |
| × | × | × | × | × |
| × | × | × | × | × |
| × | × | × | × | × |

$C_1$ · $B_1$ · $D_1$ · $F_1$ · $A_1$ · $E_1$

**Fig. 12** — $\theta = 90°$

| 11 | 11 | 0 | -11 | -11 |
|---|---|---|---|---|
| 11 | 11 | 0 | -11 | -11 |
| 11 | 11 | 0 | -11 | -11 |
| 11 | 11 | 0 | -11 | -11 |
| 11 | 11 | 0 | -11 | -11 |

**Fig.7** — $\theta = 120°$

| | | | | |
|---|---|---|---|---|
| × | × | × | × | × |
| × | × | × | × | × |
| × | × | × | × | × |
| × | × | × | × | × |
| × | × | × | × | × |

$C_1$ · $B_1$ · $D_1$ · $F_1$ · $A_1$ · $E_1$

**Fig. 13** — $\theta = 120°$

| 10 | -3 | -10 | -10 | -10 |
|---|---|---|---|---|
| 10 | 8 | -10 | -10 | -10 |
| 10 | 10 | 0 | -10 | -10 |
| 10 | 10 | 10 | -8 | -10 |
| 10 | 10 | 10 | 3 | -10 |

**Fig.8** — $\theta = 150°$

| | | | | |
|---|---|---|---|---|
| × | × | × | × | × |
| × | × | × | × | × |
| × | × | × | × | × |
| × | × | × | × | × |
| × | × | × | × | × |

$C_1$ · $D_1$ · $B_1$ · $A_1$ · $F_1$ · $E_1$

**Fig. 14** — $\theta = 150°$

| -10 | -10 | -10 | -10 | -10 |
|---|---|---|---|---|
| 3 | -8 | -10 | -10 | -10 |
| 10 | 10 | 0 | -10 | -10 |
| 10 | 10 | 10 | 8 | -3 |
| 10 | 10 | 10 | 10 | 10 |

Fig.15

Fig.16

Fig.17

EP 0 219 435 B1

Fig.18